# EUROPEAN PATENT SPECIFICATION

(11) **EP 4 223 397 B1**
(45) Date of publication and mention of the grant of the patent: **05.08.2026**
(21) Application number: 20955481.5
(22) Date of filing: 02.10.2020
(51) Int. Cl.: B09B 3/30, C10L 5/44

(54) **SYSTEM FOR WASHING BIOLOGICAL WASTE TO RECOVER SAME AS SOLID BIOFUEL**
SYSTEM ZUM WASCHEN VON BIOLOGISCHEN ABFÄLLEN ZUR RÜCKGEWINNUNG DAVON ALS FESTER BIOKRAFTSTOFF
SYSTÈME DE LAVAGE DE RÉSIDUS BIOLOGIQUES POUR LEUR RÉCUPÉRATION COMME BIOCOMBUSTIBLE SOLIDE

(43) Date of publication of application: 09.08.2023
(73) Proprietor: LIGNIUM IP LLC, Houston, TX 77004 (US)
(72) Inventor: CARABALL UGARTE, José Antonio, Valparaíso (CL)
(74) Representative: Sugrañes, S.L.P.
(86) International application number: PCT/CL2020/050112
(87) International publication number: WO 2022/067450

(56) References cited:
- EP-A1- 3 219 680
- EP-A1- 3 279 309
- WO-A1-2017/181299
- WO-A1-2017/181299
- WO-A2-2012/170519
- JP-A- 2004 105 878
- KR-B1- 101 164 507
- US-A1- 2010 107 474
- US-A1- 2019 106 643
- US-B1- 8 043 496
- LANGONE MICHELA ET AL: "Anaerobic Digestion of Cattle Manure Influenced by Swirling Jet Induced Hydrodynamic Cavitation", APPLIED BIOCHEMISTRY AND BIOTECHNOLOGY, HUMANA PRESS INC, NEW YORK, vol. 184, no. 4, 4 October 2017 (2017-10-04), pages 1200 - 1218, XP036474703, ISSN: 0273-2289, [retrieved on 20171004], DOI: 10.1007/S12010-017-2612-3
- LANGONE MICHELA; SOLDANO MARIANGELA; FABBRI CLAUDIO; PIROZZI FRANCESCO; ANDREOTTOLA GIANNI: "Anaerobic Digestion of Cattle Manure Influenced by Swirling Jet Induced Hydrodynamic Cavitation", APPLIED BIOCHEMISTRY AND BIOTECHNOLOGY, vol. 184, no. 4, 4 October 2017 (2017-10-04), New York , pages 1200 - 1218, XP036474703, ISSN: 0273-2289, DOI: 10.1007/s12010-017-2612-3
- GARUTI MIRCO; LANGONE MICHELA; FABBRI CLAUDIO; PICCININI SERGIO: "Monitoring of full-scale hydrodynamic cavitation pretreatment in agricultural biogas plant", BIORESOURCE TECHNOLOGY, ELSEVIER, AMSTERDAM, NL, vol. 247, 19 September 2017 (2017-09-19), AMSTERDAM, NL , pages 599 - 609, XP085298914, ISSN: 0960-8524, DOI: 10.1016/j.biortech.2017.09.100
- TERáN HILARES R.; DIONíZIO R.M.; PRADO C.A.; AHMED M.A.; DA SILVA S.S; SANTOS J.C.: "Pretreatment of sugarcane bagasse using hydrodynamic cavitation technology: Semi-continuous and continuous process", BIORESOURCE TECHNOLOGY, ELSEVIER, AMSTERDAM, NL, vol. 290, 8 July 2019 (2019-07-08), AMSTERDAM, NL , XP085755555, ISSN: 0960-8524, DOI: 10.1016/j.biortech.2019.121777
- BIOBANG CAVITATOR: "BioBANG Pre Treatment Feed", YOUTUBE, 5 December 2016 (2016-12-05), XP093047337, Retrieved from the Internet <URL:https://www.youtube.com/watch?v=-80KPjvjyBI> [retrieved on 20230516]
- CRUDO, D. ROTOCAV: "Hydrodynamic Cavitator for biomass pretreatment - Easily explained", YOUTUBE, 13 February 2019 (2019-02-13), XP093044811, Retrieved from the Internet <URL:https://www.youtube.com/watch?v=QVeUcM2ibfI> [retrieved on 20210525]
- LIFE STO3RE: "Vídeo oficial del Proyecto LIFE STO3RE", YOUTUBE, vol. Video of, 24 July 2019 (2019-07-24), XP093047340, Retrieved from the Internet <URL:https://www.youtube.com/watch?v=KQHdBiqNyVk> [retrieved on 20230516]

## Description

This method makes it possible to obtain a product with a high calorific value, low emission of toxic gases and ash, and low vitrification in the oven or stove as it is calcined, which corresponds in particular to lignin, cellulose, hemicellulose and derivatives thereof, with great energy savings in the process and low intensity of labour during operation.

In any industry that works with or emits biological waste, in particular in the management of slurry (cattle manure) in the livestock industry, which is a difficult problem to address, since it is a residue that can contaminate properties, groundwater and the environment in general. Likewise, there is concern regarding the sanitary management of agricultural manure in these industries.

Particularly, the manure generated can cause negative environmental impacts if there is no control of its storage, transportation or application, due to the emission of polluting gases into the atmosphere and the accumulation of micro- and macro-nutrients in the soil and in surface water bodies as the final destination for such manure.

The present development presents a system, a method and a biomass or derivative product with a high calorific value that is extremely efficient in contributing to the reduction of greenhouse gas emissions. In practice, it allows the replacement of fossil sources by biomass. Significant energy savings and efficiencies in labour intensity are generated during its production process.

### Scope of Application

The scope of application of this system, method and product includes the treatment of waste (solid and semi-solid) of biological origin, particularly in the livestock industry, biomass recovery systems for energy generation and biomass drying and preparation processes.

Greenhouse Gas Emissions from the Agricultural Sector.

The livestock sector is responsible for 18% of greenhouse gas emissions measured in CO₂ equivalents. This is a higher contribution than that of transport.

The livestock sector is responsible for 9% of anthropogenic emissions of CO ₂. Most of this is derived from changes in land use, especially due to the deforestation caused by the expansion of grasslands for fodder. In addition, stabled animals, especially cattle, are responsible for the emission of gases with much greater potential to warm the atmosphere. This sector emits 37% of anthropogenic methane (with 84 times the global warming potential [GWP] of CO₂) produced in the most part by the enteric fermentation of ruminants. It emits 65% of anthropogenic nitrous oxide (with 296 times the global warming potential of CO₂), mostly through manure. Livestock are also responsible for nearly two thirds (64%) of anthropogenic ammonia emissions, which significantly contribute to acid rain and ecosystem acidification.

This high level of emissions opens great opportunities for climate change mitigation through actions with livestock (FAO Livestock's long shadow: environmental issues and options, 2006).

It should be noted that the livestock sector is responsible for 20% of terrestrial animal biomass.

As described in the present development, it is necessary to have methods for the treatment of manure, slurry and other residues of biological origin, with low energy consumption, that allow obtaining products with a high calorific value, with low concentrations of silica within the ash, low concentration of nitrogen, and which when burned release low concentrations of harmful gases. Intermediate products may also be produced that serve as an excipient base for other synthesis routes, such as products high in lignin but with traces of cellulose, hemicellulose and similar derivatives.

### Water contamination

The livestock sector is a key factor in the increase of water use since it is responsible for 8% of the world consumption of this resource, mainly for the irrigation of fodder crops (FAO Livestock's long shadow: environment issues and options, 2009).In addition, it is probably the highest source of water pollution and contributes to eutrophication, the "dead" zones in coastal areas, coral reef degradation, the appearance of human health problems, antibiotic resistance and many other problems. The main sources of pollution come from animal waste, antibiotics and hormones, the chemicals used in tanneries, fertilisers and pesticides used on fodder crops, and eroded grassland sediments. That is why we must search for ways to reuse and decontaminate this liquid waste.

The development described herein partly mitigates the effects of livestock on water and soil contamination. (FAO Livestock's long shadow: environmental issues and options, 2009)

### Description of the State of the Art

According to the FAO (http://www.fao.org/ag/againfo/programmes/es/lead/toolbox/Tech/21Mansto.htm), the Netherlands' standards for quantities of mixed manure (including faeces and urine but excluding sewage) produced by livestock annually, are:
Adult dairy cows: 23,000 L
Feeder cattle (1-2 years) 10,000 L
Sows with piglets 4,700 L
Feeder pigs 1,100 L
Broilers 11 L
Layers 87 L

Particularly, in the livestock industry, both manure and slurry generally correspond to a mixture of the animals' faecal matter with their urine and eventually the bedding material, the latter being understood as the resting and feeding place for the animals.

The manure, in addition to containing faecal matter and urine, can consist of other elements, such as those present in the bedding, generally straw, and also sawdust, wood shavings, chemical products, sand, shells, bran, remains of the livestock feed, and water.

Manure is normally applied on the ground, providing organic matter to the soil. The contribution of organic matter entails an improvement of the soil structure and increases its water retention capacity.

On the other hand, manure is a rich source of plant nutrients (N, P, K).

The amount of nutrients and minerals present in manure depends on several factors, among which we can highlight the following: Type of livestock, livestock feed (which is directly related to the destination of the animal) and environmental conditions.

One of the elements that makes up manure is vegetable residue of different kinds, among which we can highlight lignocellulose and its derivatives.

Lignocellulose is a complex material that constitutes the main structure of plant cell walls and is composed mainly, in the case of cereals, of cellulose (40-50%), hemicellulose (25-30%) and lignin (15-20%), in the case of grasses (forage consumed by ruminants), the average percentages are divided into cellulose (24-39%), hemicellulose (11-39%) and lignin (4-11%). Cellulose is a homogeneous linear polymer with 7,000 to 15,000 glucose units linked by glycosidic bonds that are stabilised with hydrogen bonds. Hemicellulose is a branched or linear heteropolymer of between 200-400 units of different pentoses, hexoses and uronic acids with an amorphous structure. Lignin is a cross-linked amorphous polymer of three units of p-coumaryl phenylpropane, coniferyl, and alcohol. In order to decrease the world's dependence on fossil fuels, there are alternative sustainable energy sources and chemical products to be exploited. One of these possible sources is lignocellulose biomass such as wood or agricultural residues (Brethauer, S., & Studer, M. H. (2015). Biochemical Conversion Processes of Lignocellulosic Biomass to Fuels and Chemicals - A Review. CHIMIA International Journal for Chemistry, 69(10), 572-581).

Another element within the composition of slurry is made up of significant amounts of silica or derivatives thereof directly related to the amount of ash existing in its combustion. There are also other biological wastes with large amounts of silica in their structure, such as rice husks, which increase the percentage of silica in the final residue when they remain as part of the slurry (they cannot be digested) or simply as waste. It is important to make this reference to silica because when the finished products (briquettes, pellets or others) under any process modality are burned, the silica can reach temperatures above its melting point between 1100 and 1700 °C, vitrifying the surfaces of boilers and ovens, causing them to lose heat exchange efficiency.

Another element in the composition of slurry is nitrogen, in the form of uric acid, such as ammoniacal nitrogen and other nitrogen derivatives. In bovine slurries the ratio is generally 50% uric acid and 50% ammoniacal nitrogen. As an example, one ton of nitrogen can be found in a 500 m3 well with a slurry having 4% solid mass. This concentration is important for soil nitrification, however, for the end product of this development in the form of ligno-cellulose briquettes or pellets to be burned it is a problem. The problem is that the generation of N-Oxides (NOx) after a combustion process is already known. These N-Oxides tend, naturally, to superoxidise, forming NO₃ and with atmospheric water to form HNO₃, a corrosive compound that is harmful to health and combustion equipment. Through another pathway, N₂O can be formed, a product that is highly damaging to the ozone layer and very chemically stable, with a half-life of over 170 years. In summary, the nitrogen derivatives and percentages that remain in the end product are extremely important at the time of burning because they carry toxic, corrosive and persistent by-products into the environment. The patent by the same inventor WO2017/181299 relates to a method for the purification of lignin, cellulose and hemicellulose obtained from purines, which can be burned in compliance with environmental standards as a substitute for wood. The method of the invention produces a novel bio-fuel. It mentions in its example of Table 17, 0.61% w/w of nitrogen in the end product. The present development manages to reduce this amount of nitrogen, approximately, by 30% w/w in the end product, based on the operation of the present process presented below. This is due to the fact that chemical reactions take place in the cavitation step, where O₂ from the environment reacts and, to a greater extent, O₃ that is injected with nitrogen from the treated slurry, generating NO, which decreases the final concentration of nitrogen in the end product.

Among agricultural residues we commonly find bovine slurries, which are available at very low cost, but with a non-negligible handling and disposal cost, where also, in order to reduce costs, the use of the product resulting from the treatment of these slurries without pre-treatment as fuel or fuel feedstock has been studied.

To date, techniques have been described for the detection and quantification of the content of the main components of manure (cellulose and protein), which use a solid/liquid physical separation method, manure hydrolysis and fungal culture to recover carbohydrates and proteins from the raw material in order to produce cellulase (Value-Added Chemicals from Animal Manure S. Chen, et al. Pacific Northwest National Laboratory, 2003). In the case of obtaining lignin from agricultural residues and assessing its quality by means of different analytical methods, this is basically done by subjecting agricultural residues to a reduction to alkaline paste, treating it with formic acid and hydrogen peroxide, to then characterise the lignin by means of the Klason method, FT-IR spectroscopy, elemental analysis, thioacidolysis, SEC and different wet chemical methods (Separation and characterisation of sulphur-free lignin from different agricultural residues Christine Rossberga, Martina Bremer, Susanne Machill, Swetlana Koenigc, Gerhard Kerns, Carmen Boeriud, Elisabeth Windeisene, Steffen Fischer, Industrial Crops and Products, VOL 73, pages 81-89, 30 October 2015).

Among the general techniques of mechanical separation in the liquid/solid fractions of manure most used in commercial plants is decantation by centrifugation, chemical treatment plus separation by belt press, rotary drum filter plus screw press, screw press plus vibration filter, sonication and screw press only. It is considered that only mechanical separation techniques are included that use moving filters and presses (Chemical and biochemical variation in animal manure solids separated using different commercial separation technologies, Karin Jorgensen, Lars Stoumann Jensen Bioresource Technology 100 (2009) 3088-3096).

In addition to the mechanical techniques for separating the liquid/solid fraction of manure, a separation method has been described by means of a coagulation-flocculation process, whose separation protocol consists of taking the raw manure stored at 4 °C and sieving it through a 1 mm mesh, then subjecting it to a coagulation/flocculation process according to the following conditions and steps: (1) for the coagulation process, coagulant solution was added and mixed for 2 min at 175 rpm; (2) for flocculation, a polyacrylamide solution is added and mixed for 13 minutes at 50 rpm; (3) the solid is allowed to form or settle during 2 hours, when the supernatant is extracted, or when for 5 minutes when a filter press is used to separate the solid fraction (Characterisation of solid and liquid fractions of dairy manure with regard to their component distribution and methane production J.L. Rico, H. Garcia, C. Rico, I. Tejero Bioresource Technology 98(2007) 971-979).

Another component that can be found in slurry is methane, a gas used as fuel. The yield and quality of this compound obtained from manure has been studied, with its results expressed according to the volatile solids (VS) parameter (Methane productivity of manure, straw and solid fractions of manure H.B. Moller, S.G. Sommer, B.K. Ahring, Biomass and Bioenergy 26 (2004) 485-495).

Additionally, there are processes for extracting manure products for other purposes. For example, document US 4018899 A discloses a process for extracting food products from animal manure comprising: forming a manure water slurry in a first pit and allowing said slurry to ferment; then separating said suspension into solid and liquid fractions, where the solid fraction comprises a silaged component such as undigested fibres and grain; and where the liquid fraction comprises protein-rich nutrients and relatively indigestible dense mineral materials and fibre particles, ultimately separating said components and then processing the liquid fraction for use as a feed supplement containing relatively low amounts of indigestible minerals such as lignin and hemi-cellulose and fibre particles.

Documents WO 2015086869 A1 and ES 2171111 A1 present different procedures for slurry treatment. Document WO 2015086869 A1 discloses a procedure comprising: (a) solid/liquid physical separation in a liquid effluent containing slurry; (b) physical-chemical separation of the liquid fraction obtained in step (a), to obtain a solid and a liquid fraction; (c) electrocoagulation of the liquid fraction obtained in the step to obtain a solid and a liquid fraction; and (d) pelletising the solid fractions obtained in steps (a), (b) and (c) in the presence of chemical or lignocellulosic materials. In addition, this document indicates that the solid agglomerate obtained from the pelletising process offers a high calorific value in combustion, and the resulting liquid is left a very low content of nitrogenous compounds. Here it can be seen that the solid fraction is left with high levels of nitrogen because this element is found in low amounts in the liquid fraction. This results in a high amount of NOx emission when burning the pellets, briquettes or any solid form with this residue. Also, and as additional information, when NOx is emitted it has an unpleasant odour, which is part of the odour generated by pollutants when incinerated, such as heavy metals and high concentrations of ash.

For its part, document ES 2171111 A1 presents a procedure and a plant for the treatment of slurry, which comprises: (ii) carrying out a physical-chemical treatment on the liquid phase of the slurry to reduce the emission of ammonia contained in said slurry during the evaporation step, by means of stripping or fixation by acidification; (ii) subjecting the liquid stream resulting from step (i) to vacuum evaporation until obtaining a solids concentrate containing between 20% and 30% by weight of solids; and (iii) drying the solids concentrate from step (ii) until obtaining a product with a maximum moisture content of 12% that is useful as organic fertiliser, or enriched with a fertilising ammonium salt.

Documents WO 2011/133190 and US 2014/250776 present respectively products and processes for waste derived from different types of slurry. Document WO 2011/133190 describes a biomass composition, where this composition includes: (i) a lignocellulosic material; and (ii) at least one member selected from the group consisting of potassium, sodium, and chlorides, wherein said at least one member comprises no more than about 0.01% (by weight) of said composition. The composition may not include more than 10% water.

On the other hand, document US 2014/250776 presents a process for converting waste fibres into solid fuel, which includes the supply of animal waste, including the waste fibres, in a predetermined amount; flushing the animal waste supplied during a predetermined flushing period; dewatering the animal waste supplied by removing water from the waste fibres for a predetermined dewatering period; detachment of the waste fibres to separate liquids from solids; compressing the dried and separated waste fibres to generate a plurality of briquettes; roasting at least one of the plurality of briquettes in a roasting reactor using a heat source at a predetermined roasting temperature for a predetermined roasting period; withdrawing from the reactor at least one of the plurality of briquettes; and cooling the roasting reactor to reach a predetermined cooling temperature.

Also document US 2011/0089271 presents a method and a device, and the use thereof, to produce fuel pellets from wet biomass of any kind, where the biomass is shredded, mechanically dehydrated, dried, and then processed into pellets, where the shredded product is finely shredded and/or the biomass is washed either before or after the shredding, optionally with water extracted from the mechanical dehydration, and is optionally pre-dehydrated and/or heated before the mechanical dehydration step, and optionally ground again after mechanical dehydration by simple drying.

Processes that use ultrasound as a step in the separation of components are also described, such as in document CN 104611084, which discloses a method to produce a clean energy material from agricultural and forestry residues, producing a solid lignocellulosic material. The method comprises the steps of decomposition and separation of the solid lignocellulosic material from agricultural and forestry residues and the production of clean energy material. The material is fed into the system (step a)) via a screw conveyor, the interior of which is in communication with a chamber comprising an ultrasound generator that generates ultrasound vibrations in the presence of water (steps (b) and c)), causing the material to lose its microstructure, and in this state the material is subjected sequentially, with stirring, to primary crushing, dilaceration and liquid-solid separation (step (d)), compression and separation of components (step (e)) and finally the production of dry lignocellulosic material (steps f) and g)). On the other hand, as a summary, this patent includes in its process the expansive explosion of vapour, microwaves, heating, a number of extra chemical and biological processes, such as decomposition of cellulose. Finally, the product of this process is mixed with coal dust to obtain a product with a high calorific value.

Another document, in line with sonication is document US 20100304440, which discloses a method for processing biomass to obtain ethanol from plant residues. Where biomass (for example, plant biomass, animal excrement biomass, and municipal waste biomass) is processed to produce useful products such as fuels. For example, the systems may use as feed materials such as cellulosic or lignocellulosic, and/or starch- or sugar-containing materials to produce ethanol and/or butanol by fermentation, for example. The document also teaches that sonication breaks the lignin and cellulose bonds, creating bubbles that burst in the medium containing the lignin and cellulose, in order to better expose the residues from the bursting to biological processes. When the bubbles burst, which can occur in less than a nanosecond, the implosive force increases the local temperature inside the bubble to approximately 5100 °K and generates high pressures. It also indicates that these materials are sonicated with a frequency range of 16 kHz to 110 Khz. These high temperatures and pressures break the bonds in the material. It also shows a general system in which a stream of cellulosic material mixes with a stream of water in a tank to form a process stream, where a first pump draws the process stream from the tank and directs it to a flow cell. The ultrasonic transducer transmits ultrasonic energy, causing the described physical-chemical process. It is also stated that, upon separation, the solid material dries and can be used as an intermediate fuel product.

Document DE 1020014116250 also proposes a method for treating a mixture of at least one liquid phase and at least one solid phase, in particular liquid manure or sewage sludge, comprising the steps of: a) generating an ultrasound field (5.1b-5). nb); b) transporting the mixture through the region of the ultrasonic field; c) treating the mixture with ultrasound in the region; and d) separating the mixture into the liquid phase and the solid phase after ultrasonic treatment. It also proposes that a suitable apparatus be available to carry out the process and use the solid phase generated by the process or apparatus. The objective of this method in general is to decrease the water content for the solid part between 1.8% to 3%, increasing the amount of nitrogen in the solid to make it a good fertiliser.

On the other hand, and aimed towards a chemical separation, it was found that document WO 2013007847 presents a treatment system for wastewater containing biological waste through electrocoagulation and electro-oxidation, which consists of the inclusion of slurry into a slurry pit by means of a pumping system, where it is exposed to a solid/liquid separator or filter press. The process consists of sending the solids to a storage container to be dried through exposure to the open air or artificially to obtain soil fertilisers, while the liquids are sent to a flotation-flocculation tank. In this flotation-flocculation tank, sludge is generated that is sent to the filter-press, from which it is mixed with the solids coming from the storage tank, while the liquid matter is passed through electrocoagulation equipment for separation from the floating sludge, from the precipitated sludge and the clarified water that is sent to a tank. The floating sludge is transferred by decantation to the filter press, while the precipitated sludge is purged, and the treated water goes through a process where caustic soda is added to increase the pH and thus be included in an electro-oxidation step.

Documents WO 2009108761 and US 6149694 disclose procedures for producing fuel from organic waste. Document WO2009108761 A1 discloses a process for producing fuel from liquid hydrocarbons from organic medical waste materials based on distillation treatments, through distillation towers or cracking towers. The procedure consists of preparing a suspension from the waste materials to form a stream, the volume of which stream accumulates in a stirred vessel. Subsequently, the stream is heated to a temperature between approximately 60-700 °C and a pressure between 20-600 psi to decompose solid organic materials and inorganic materials separately.

On the other hand, document US 6149694 discloses a procedure for forming fuel from livestock waste, which comprises: (i) forming a mixture having a number of solid components derived from livestock waste and a second waste product different from said livestock waste, where the solid components have a moisture content before said formation step, and where the mixture formed has a lower moisture content than the solid content, and (b) forming the mixture resulting from step (a) into a self-supporting body having a density close to approximately 20-40 pounds/ft³. In summary, this patent presents a traditional solid/liquid separator by screw or screening which about 40% to 60% of sawdust is added to make a pellet, where this product retains all the contaminants from its source residue, such as high concentration of ash, heavy metals, high concentrations of nitrogen, among others.

Documents CA 2670530, DE 102010019321 and US 20150004654 disclose procedures for the mechanical separation of the liquid and solid components of manure used as a raw material to produce fuel pellets. Of these, document CA 2670530 discloses that said pellet contains approximately 25%-75% by weight of cellulosic material (cellulose, lignin and hemi-cellulose); and approximately between 14%-75% by weight of waxed cellulosic material, which corresponds to lignocellulose to which a layer of wax was added. Specifically, the process disclosed mixes 42% of manure, with 40% of sawdust, cotton, jute, etc. and the remaining percentage with paper, cardboard, or another derivative of paper.

In the case of document DE 102010019321, it discloses a process to produce fuel pellets from an initial mixture made up of liquid and solid components, where said method consists of the following steps: separating the solid and liquid components, extracting energy from the liquid components and drying the solid constituents. The extraction of energy from the liquid components is based on a fermentation step.

Finally, document US 20150004654 discloses a process for producing biomass and sugar pellets from cellulosic material. In general, it describes a process of extraction of sugars from wood through hot water and/or vapour, followed by fermentation. It is a process to increase the calorific value of wood by eliminating the cellulose, to make it similar to the calorific value of coal and thus be able to replace it, since a coal-fired boiler loses 60% of its calorific capacity if firewood is used.

Humanity from the beginning of time to the present has used the burning of dung as fuel. However, it is known that this causes various health problems. WHO estimates suggest that up to 6.5% of the annual disease burden in developing nations is due to the indoor burning of solid fuels (Combustion of dried animal dung as biofuel results in the generation of highly redox active fine particulates, Particle and Fibre Toxicology 2005, 2:6, 04 October 2005).

It is relevant to indicate that the smell produced by the direct burning of dung is a very important factor since it permeates clothes, homes and entire environments, in addition to the obvious environmental problems that this causes.

It is also relevant to point out that the purpose of using the dry products or by-products of the aforementioned processes, in general, only points to the production of solids for burning or power generation. However, ligno-cellulosic material, as a by-product, can also be used as a reactant in processes that do not lead to the destruction of the by-product for power generation, thus being a way of recovering a waste with a higher added value.

In addition to the health problems and costs already described, there are technical problems when using this type of fuel without any prior treatment. In boilers, corrosion of the steel is observed regardless of its origin (normal steel, chrome steel, stainless steel). It is possible to observe a corrosion of 8 mm per year, as indicated in the referred document (http://www.um.edu.uy/docs/6_comportamiento_de_cenizas_y_suimpacto_en_si stem as_de_%20combustion_de_biomasa.pdf Ash Behaviour and its Impact on Biomass Combustion Systems, Report on Scientific and Technical Diffusion Works, no. 10 (2012) 69, ISSN 1510-7450, ISSN (online) 1688-9584).

This problem also occurs with biomass derived from animal fodder, leaves and tree branches, since chlorine is fixed in the leaves, bark and in all fast-growing crops.

The present development corresponds also to a contaminant-free calorific energy product, with minimal or no amounts of silica monitored through the ash, minimum concentrations of nitrogen and odourless. This is therefore a combustible product with high calorific power, but derived from animal waste with high levels of silica and high levels of nitrogen such as manure among others.

Due to the diet of ruminant animals, which feed mainly on grasses, their digestive process uses cellulose and hemicellulose as a source of sugars, leaving lignin as waste, which is indigestible, but with a calorific value of approximately 5500-6500 Kcal/kg. (Studies on the Energy Assessment of Forestry Fuels for the prevention of forest fires in Sierra de la Primavera (Jalisco, Mexico) by means of Combustion Calorimetry and Flammability tests, Thesis by Antonio Rodriguez Rivas, University of Compostela, Spain, 2009).

### Detailed description of the development

It should be understood that the present development is not limited to the particular methodology, methods, systems, composite products, materials, manufacturing techniques, uses and applications described herein, as these may vary. It should also be understood that the terminology used herein is employed for the sole purpose of describing a particular embodiment, and is not intended to limit the scope and potential of the present development.

It should be noted that the method, system, product and use, here, in the claims and throughout the text that the singular does not exclude the plural, unless the context clearly implies so. So, for example, the reference to a "use or method" is a reference to one or more uses or methods and includes equivalents known to those skilled in the art. Similarly, as another example, a reference to "a step", "a stage" or "an embodiment" is a reference to one or more steps, steps or embodiments and may include implicit and/or supervening sub-steps, steps or embodiments.

All the conjunctions used must be understood in the least restrictive and most inclusive sense possible. Thus, for example, the conjunction "or" must be understood in its orthodox logical sense, and not as an exclusive "or", unless the context or the text expressly requires or indicates so. The structures, materials and/or elements described must also be understood to refer to functionally equivalent ones in order to avoid endless exhaustive enumerations.

The expressions used to indicate approximations or conceptualisations must be understood in this way, unless the context mandates a different interpretation.

All names and technical and/or scientific terms used herein have the common meaning given by a common person, qualified in these matters, unless otherwise expressly indicated.

Methods, techniques, elements, compounds, and compositions are described, although similar and/or equivalent methods, techniques, compounds, and compositions to those described may be used or preferred in the practice and/or testing of the present invention.

All patents and other publications are incorporated as references, with the purpose of describing and/or informing about, for example, the methodologies described in said publications, which may be useful in relation to the present development.

These publications are included only for the information they contain prior to the filing date of this patent application.

The following concepts are defined to provide clarity to this development:
Cavitation or vacuum suction: for the present development, the cavitation process is understood as a hydrodynamic effect that occurs when vapour cavities are created within water or any other liquid fluid in which are acting forces that respond to pressure differences, as can happen when the fluid passes at high speed along a sharp edge, producing a decompression of the fluid due to the conservation of Bernoulli's constant. The vapour pressure of the liquid may be reached, such that the molecules that compose it immediately change to the vapour state, forming bubbles or, more correctly, cavities. The bubbles formed travel to areas of higher pressure and implode (the vapour suddenly returns to the liquid state, abruptly "squashing" the bubbles) producing a high-energy gas trail on a solid surface that implodes, cracking it upon impact.

The implosion causes pressure waves that travel through the liquid at speeds close to the speed of sound, regardless of the fluid in which they are created. These can dissipate in the liquid stream or they can impact upon a surface. If the area on which the pressure waves collide is the same, the material tends to weaken structurally and an erosion begins which, in addition to damaging the surface, causes it to become an area of greater pressure loss and therefore a greater centre for the formation of vapour bubbles. If the vapour bubbles are near or in contact with a solid wall when they implode, the forces exerted by the liquid crushing the cavity left by the vapour give rise to very high localised pressures, causing pitting on the solid surface. Note that depending on the composition of the material used, this could lead to oxidation, with the consequent deterioration of the material. (https://en.wikipedia.org/wiki/Cavitation)

Biomass: for the present development, biomass will be understood as the waste products of animal metabolic processes, especially those of cattle and pigs, and other elements used for their diet; it can also be understood as the waste product of a bioreactor, which has a high content of ash (heavy metals, silica, among others), a high nitrogen content, a high sulphur content, among other parameters that will be seen in the application example.

Slurry: the terms "manure", "slurry" and "dung" are used to refer to livestock faeces. The difference between one and the other is unimportant both for the product and for the method, since it simply lies in the fact that the slurry is collected in a pond or slurry pit and the term manure and dung is more generic, it could have a water content lower than that found in a slurry pit and does not make specific reference to the form of storage.

In any case, the way of collecting and storing the manure does not affect or change the method described or the quality of the solid lignocellulose biofuel obtained from it.

Regulations: refers to compliance with the limit parameters of standard ISO 17225-6, and also to the specific parameters of each of the analyses carried out for this development.

Silica: refers to silicon oxide, sand and its derivatives, generally between 7% to 12% of dry bovine faeces.

Nitrogen: defined, for this development, as all the nitrogenous material that exists in the aforementioned animal waste, formed broadly by urea nitrogen, such as uric acid and ammoniacal nitrogen.

The present development corresponds to a method, a system and a product and by-product for synthesis (or intermediate product) that is obtained or can be obtained through the treatment of slurry that allows obtaining the greatest amount of ligno-cellulose as a raw material and/or fuel, the largest amount of cellulosic material as a product for burning and the by-product for synthesis, for both, with a minimum amount of contaminants, a minimum amount of silica related to the ash residue, and a minimum amount of nitrogen. The procedure uses organic waste from livestock, which consists of faeces and urine and/or slurry.

Within the method, it is of the utmost importance to mention in the present development the energy savings based on the use of energetically passive substeps during washing, which will be described below.

The present development also corresponds to a method for the treatment of manure that leads to obtaining a high-quality fuel product that efficiently replaces the use of firewood and coal in boilers, whether for residential or industrial use.

Quality means a high standard of efficiency, through a greater amount of kcal/kg, a lower emission of toxic gases, a lower generation of ash well below the lower limits imposed by standard ISO 17225-6, which indicates between 6% to 10% w/w as combustion ash residue, with a lower production of silica as combustion residue, with a lower existence of nitrogen derivatives, as well as having a low energy consumption production process, harmonious with current environmental standards such as caring for the environment, helping to reduce environmental pollution, decreasing gas emissions, improving the sanitary status of livestock companies, and recycling the liquids and solids involved in the process, reusing them efficiently.

The aforementioned fuel product of the present development is obtained through the treatment of slurry or manure to obtain derivatives with lignin or lignocellulose as raw material and/or fuel.

### Detailed Description of the Process

The present process is based on patent application WO2017/181299, where a slurry pit is defined as a pool that collects cattle faeces and urine. Likewise, it can be composed of other elements, such as those present in cattle bedding (straw and sawdust), residues from biodigesters or bioreactors, digestates, pieces of rubber from rubber blankets, rubber, wood shavings, plant husks, such as from rice, chemical products, sand, cattle feed remains, and water, among many others.

It is already known that the process can be carried out through three alternative system feeding paths.

In the first system feeding alternative, the material coming from the (slurry pit or pool (A) that has a capacity range of between 200 m³ and 10,000 m³, preferably 700 m³) is connected through the passage (1) to the common screw conveyor, with a capacity for moving wet solid material (approximately 95% humidity) between 150 and 600,000 kg/h, preferably between 250 and 30,000 kg/h, with a slight filtering of liquid, where the solid remains with between 70% and 85% humidity (D), which can optionally be pre-washed with clean water (L), with a flow rate in the range of between 10 and 1000 litres/min in the step (30), which is inserted through the upper part of the screw. Optionally, in step (6), it can be ground (F) with a hammer mill or simple shredder that leaves the solid with a range of particle sizes between 5 and 20 mm and pass on to step (10) where it enters the washing system (I). If the material is taken directly from the channel that supplies a slurry pit, in a range between 250 to 30,000 kg/h with an average humidity of 70% to 85%, or the material is liquid enough without hard dung, step (7) is chosen and the material goes directly to the washing system (I).

The second alternative for feeding the system through step (2), a Slurry Pump (a) with a flow range of 80 kg/min to 14,000 kg/min, preferably 700 kg/min, preferably 100 kg/min), takes the (slurry from the slurry pit (A)) and impels them through a hose taking them to step (3), which is a traditional liquid and solid separator (C), with a capacity of between 100 to 1,000 kg/min, preferably 285 kg/min, is fed by clean water (L) through passage (29), where the clean water (L) comes externally from springs or sources without contaminants. The material that has been separated by the Liquid and Solid Separator (C) can be directed through two independent flows, step (4) and step (5). Step (4) leads directly to the washing system (I), or step (5), taking it to the hammer mill or simple shredder (F), with a grinding capacity of between 25 and 2,000 kg/min of solid material, preferably 80 kg/min, preferably 43 kg/min) having eliminated lumps, and through step (10), it reaches the washing system (I).

The third alternative for feeding the system (E) uses a Slurry Pile (E), which corresponds to that formed by waste from the liquid and solid separators from slurry pits and/or biogas plants and/or dung accumulation, optionally passing through step (8) to the hammer mill or simple shredder (F) and taken through step (10) to the washing system (I), or from step (9) directly to the washing system (I).

Any of the three alternatives used allows the material to be taken to the washing system (I), without ruling out other undefined alternatives for the entry of slurry into the washing system (I). Within these other input alternatives could be digestates directly from a biodigester or a bioreactor.

The washing system (I) comprises different associated devices and steps that cooperate with one another. If the slurry pit (A) releases slurry in sufficiently liquid, uniform conditions and without major lumps, the first device is the slurry pump (a), (included in the system because initial impulsion of the slurry is required) with a capacity of impulsion between 80 to 14,000 kg/min, preferably 700 kg/min, preferably 100 kg/min, which pumps or moves the slurry with a humidity in the range between 80% to 95%, preferably between 84% and 90%, with a percentage of dry matter between 9% to 12% w/w from any of the forms of slurry feeding, previously mentioned, to an initial device such as a screen, sieve or rotary filter (b), which can vibrate, with a filter mesh size of 10 US mesh (2mm) up to 20 US mesh (0.841 mm), which filters and separates a more homogeneous solid product than that provided by the sources of slurry delivery, previously mentioned, with a humidity range from 70% to 90% w/w, preferably 83% w/w. The screen type device refers to a flat mesh optionally vibrating to improve water run-off, positioned in the range of 30° to 60°, preferably at 45°, with a filter mesh size as mentioned above. On the other hand, the sieve type device alternative corresponds to a mesh circumscribed to a frame that can optionally vibrate to better extract the water, arranged at a negative inclination. And finally, the rotating filter type device corresponds to a rotating cylindrical mesh which filters the flow that passes through it. Several of these rotary filters can be arranged in series or in parallel, and be washed with external jets of clean water. Both the shaking and rotary types of filters maintain the same mesh size mentioned above. From the screen, sieve or rotary filter type device (b), the retained solid falls by gravity into a feeder screw device (c), which is a common solids drive screw with a material displacement capacity between 500 to 2,000 kg/hr, preferably 1000 kg/hr, with which the solid is moved to feed a dosing device (d) that makes portions and standardises the amount of solid, between 500 kg/h up to 7,000 kg/h, preferably 1,000 kg/h to enter the next device. In this step, the humidity of the product is between 60% and 35%, preferably 45% w/w. The dosing device (d), for example a basket, screw, rocker, which generally corresponds to a system for regulating the dosage of the material with a required pressure, where for example, it can be a preprogrammed funneltype bucket that releases its content when it reaches a pre-programmed weight. It mainly consists of an electro-mechanical control system for the dosage and release of the material to be measured. Once the dosing device (d) is filled, it releases its content into the washing and humidification tank (e) through the solids entry point (e2). The washing and humidification tank (e) hydrates and homogenises the previously filtered solid and brings it to a humidity between 85% and 99% by weight, preferably 97% by weight, where said washing and humidification tank (e) comprises: a tank with a capacity between 5 and 100 m³, preferably 35 m³, with an inlet for the washing water (e1), which can be above or below the tank, and through this inlet is optionally injected ozone (O₃), and another point of entry of the solid (e2) to be treated. The washing and humidifying tank (e) also includes, in the centre, a tubular paddle agitator device (e3) that, when it rotates, generates a centripetal effect from the rotating movement that sucks the mixture from below the tank into its interior and releases it through the upper part of the tube, where also, on the other hand, the washing water from the first injection (e1) generates a stream that drags the solid, separating it in combination with the previously mentioned centripetal movement effect. Alternatively, the contents of the washing and humidification tank (e) can simply be centrifugally agitated from the centre through paddles with the respective washing water from the first inlet (e1), generating a torrent that drags and separates the solid. After this, if there is excess liquid in the washing and humidification tank (e), it is expelled through the level transfer outlet (e4), in the upper part of the washing and humidification tank (e), transferring the content back to the slurry pit or tank (A). The washing and humidification tank (e) also fulfils the function of homogenising and degassing the excess Ozone (O₃), after which and continuing with the process, the transfer of solids is channelled directly from the washing and humidification tank (e) to the cavitation and impingement tanks (g) by means of cavitator pumps (g1) with a flow capacity, per cavitator, between 100 and 3,000 L per minute, preferably 800 L per minute per cavitator, with powers between 2 and 50 Kw, preferably and by way of example without wanting to restrict other capacities of the system, 4 Kw/h to be able to process between 400 and 1500 kg/hour of slurry with a range between 85% and 99% humidity on dry basis, preferably 90%, preferably 97%, preferably 98%, preferably 99%, preferably to process 500 kg/h of fibres. To produce the ozone-water mixture, it is prepared in an attached ozone preparation tank (o), where ozone is bubbled through ozone-generating machines (p) into a volume of water (J) between 1000 L/h up to 320,000 L/h, preferably 100 to 14,000 L/min, preferably 1,000 L/min.

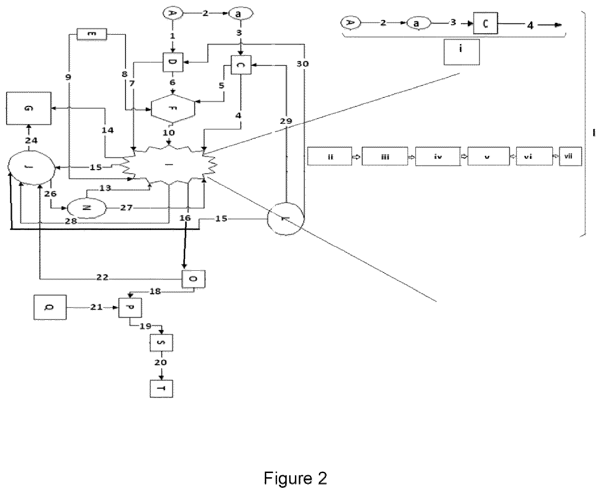

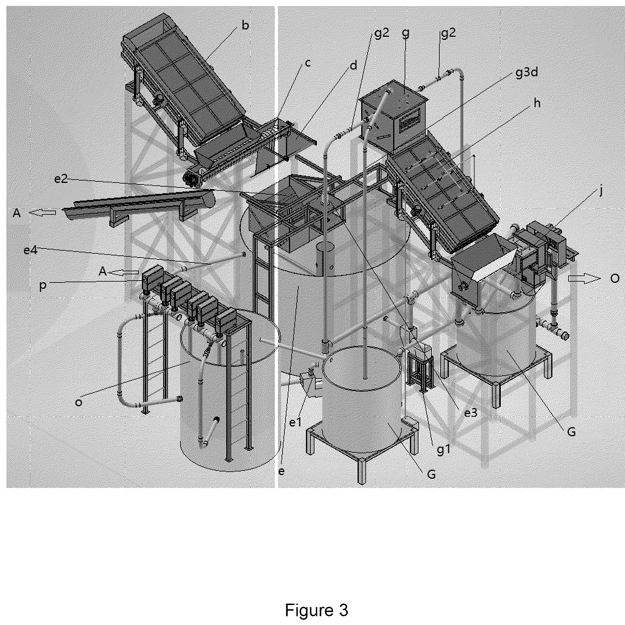

The origin of the continuous flow of water (J) is the same as that mentioned in the patent by the same inventor WO2017/181299.The water (J) that enters the Washing and humidification tank (e), after passing through the attached ozone preparation tank (o), is driven by the liquid drive pump (N) that enters through step (13) upper inlet, and step (27) lower inlet, which come from the liquid drive pump (N). The liquid drive pump (N) is supplied by step (26), which itself is fed from the accumulator and purifying tank (J). The purifying tank (J) is supplied by step (28) and by step (15) that comes from the filtrates of the entire washing system (I). For its part, the purification and accumulation tank for washing water (J) generates a flow that is represented by the step (24) and which feeds the tank with biological material concentrate and inert impurities (G), which will be treated to be left as compost. Likewise, the aforementioned biological material concentrate and inert impurities tank(s) (G) are also fed by the liquid waste generated by the final granulometric filtering (h), the gases bubbled from the cavitation and impingement tank (g) and the hammer mill screw (j), which corresponds to step 14, as can be seen in figures 2 and 3.

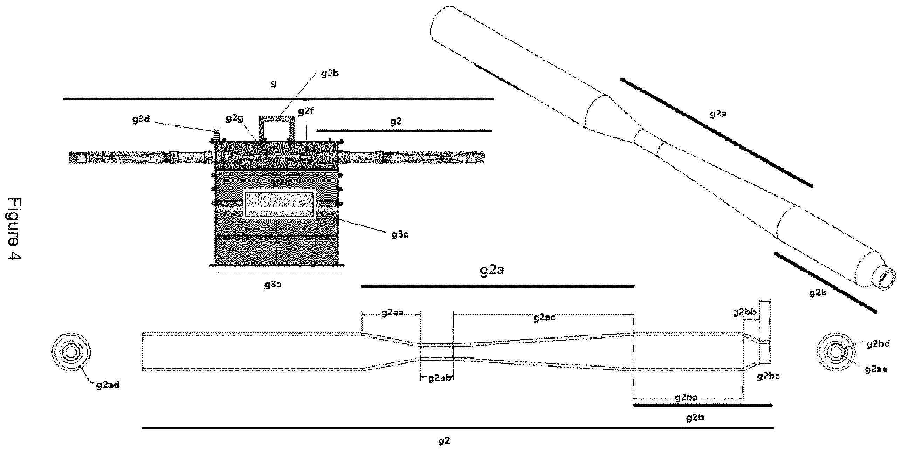

The cavitator pumps (g1) are proportional to the number of jets through which the liquid to be treated passes through the cavitation ducts (g2), this means that if the jet passes through a cavitation duct (g2), it must necessarily be driven by a pump or several jets, by a pump of greater power. The cavitation ducts (g2) can operate in series or in parallel, depending on the layout of the system, it can be one or "n" depending on the amount of product to be processed, preferably one cavitation duct, or preferably two cavitation ducts. The cavitation and impingement tank (g) comprises a series of components that will be described below, firstly, it comprises the cavitation duct(s) (g2), as described in figure 4, which in turn comprise two main structures connected to one another, the cavitation and laminar flow duct (g2a) and the impingement duct (g2b). The cavitation and laminar flow duct (g2a) comprise a tubular-shaped structure with tapered internal and external diameters (external decreases are optional), with an internal diameter between 4 cm to 22 cm, preferably 6 cm, preferably 11 cm, with a total length between 50 cm and 280 cm, preferably 75 cm, preferably 137 cm. The materials with which this duct is made include different types of abrasion and oxidation resistant metals, such as steel and alloys, they can also be polymers, such as polyamide, among others, or there can be a combination of materials in the same duct.

Internally, the cavitation duct (g2) comprises three sections, ordered from the inlet for the waste flow enters to its outlet in the final granulometric filtering (vi). First, the cavitation duct (g2) is fed from the washing and humidification tank (e) passing through the cavitation pump(s) (g1), where these residues enter through the diameter of the inlet duct (g2ad) in the first nozzle section (g2aa) in which the internal diameter of the cavitation duct (g2) is reduced with a nozzle angle of between 15° and 35°, preferably 21°. This reduction in the internal diameter (g2ae) of the cavitation duct (g2) ranges from a slight reduction in the inlet internal diameter of the cavitation duct (g2) to 1/5 of the internal diameter, preferably 1/3. This section has a length between 7 cm and 41 cm, preferably 107 cm, preferably 110 cm. Reducing the diameter of the duct in this section rapidly increases the flow rate of the fluid at a constant inlet pressure.

Following the flow of the residue, next comes the second flow load section (g2ab), which maintains a constant internal diameter in relation to the tapering in the internal diameter of the previous section, where this flow load section (g2ab) comprises a length between 4 and 23 cm, preferably 6 cm, preferably 11 cm. In this section a high flow rate is maintained at a constant pressure.

Continuing with the conduction of the fluid, comes the third and last section of the diffuser (g2ac) where the internal diameter of the cavitation duct (g2) is widened again at an angle between 5° and 10°, preferably 7°, until reaching the same inlet diameter (g2ad) of the cavitation duct (g2), where the length of this section ranges from 22 cm to 124 cm, preferably 33 cm, preferably 49 cm. In this section, the cavitation effect is produced because when the fluid comes with a high flow rate (high speed) and passes through the edge of the angle that is formed when the diameter of the duct expands, a sudden pressure drop is generated, which generates microbubbles in the fluid and their coalescence, managing to agitate the fibres, agglomerates and particles mixed in the fluid, preferably silica particles, preferably waste derived from nitrogen, sulphur derivatives, heavy metal derivatives such as cadmium, mercury, lead among others, and waste fibres. In this section and depending on the differences in the flows (relative velocities of the fluid) formed, the inlet pressure to the cavitation duct (g2) can go from a constant pressure to 25% of that pressure in milliseconds, preferably 50%, by way of example, and without limiting other ranges, from 4 atmospheres to 0 atmospheres of pressure at the outlet of this section. The process carried out in the cavitation duct (g2), does not consume energy and achieves, through a physical process, efficient separation of the fibres, the silica and the rest of the components of the treated waste in order to deliver a pre-processed product to the final granulometric filter (h), so that it, in turn, achieves maximum cleanliness.

Then, and continuing with the flow direction, a second element called the impingement duct (g2b) is connected, which communicates directly with the cavitation duct (g2) and delivers its pre-processed product to the impingement of flows. This impingement duct (g2b) comprises three sections, where the first section maintains the same internal diameter of the inlet (g2ae) to the cavitation duct (g2) and is called the separation section (g2ba), where the flow is partly retained, maintaining a laminar flow and a physical space is provided for the component elements of the waste to be separated. This section comprises a length of 14 cm to 76 cm, preferably 20 cm, preferably 30 cm.

The second section of the impingement duct (g2b), in the direction of the flow, corresponds to the outlet reduction section (g2bb), where the inlet diameter (g2ad) is reduced to a larger diameter (g2bd) with respect to the reduction diameter (g2ae) of the flow load section (g2ab), in the range of between 45% and up to slightly less than the internal diameter of the cavitation duct (g2), preferably by 50%; the length of this section it is between 2 cm and 11 cm, preferably 3 cm, preferably 5 cm. The angle of reduction in this section is of the order of between 25° and 35°, preferably 30°. This section, despite the reduction in the diameter of the duct outlet (g2bd), induces a reduced pressure, so it does not generate greater resistance and additional pressure variations.

Finally, the last section before washing the residue is the outlet section (g2bc), which can be directed and will guide the outlet jet of the residue to the final granulometric filter (h). This section maintains the reduced diameter of the previous section and has a length of between 1 cm and 7 cm, preferably 2 cm, preferably 3 cm.

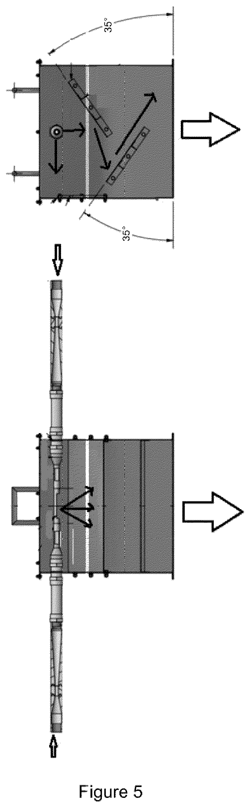

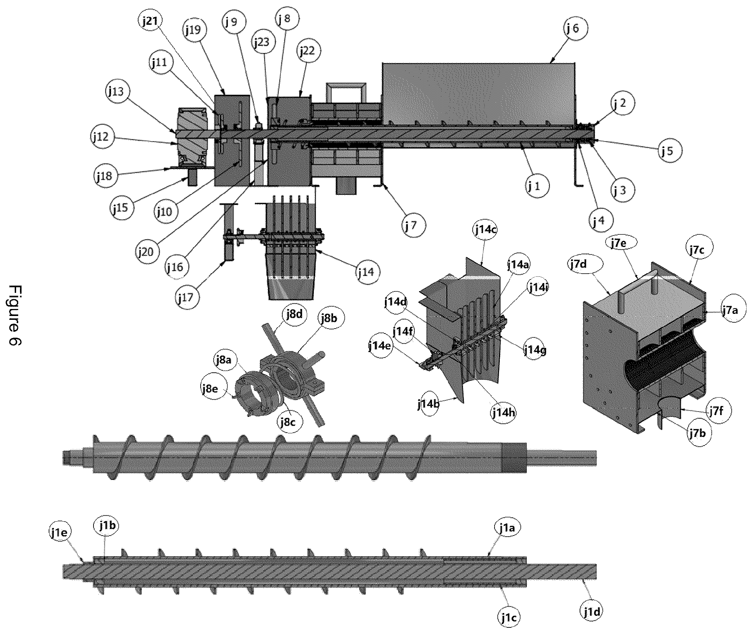

Inside the cavitation and impingement tank (g) two output jets are made to collide with each other, or an output jet against one of the walls of the tank, or against a sheet or deflector from impingement ducts (g2b), where the direction of the collision between jets is preferably frontal, although it can be angled if there are more than two jets, at a distance of between 1 cm and 200 cm, preferably 2 cm, preferably 10 cm, preferably 50 cm, preferably 100 cm, preferably 150 cm, where the ability to shred the fibres of the jets is indirectly related to the distances between the impingement ducts (g2b), in other words, the smaller the distance, the greater the shredding. To improve the frontal impingement of two jets, an optional part is presented, which makes the two impingement ducts (g2b) face one another, called the steering and impingement tube (g2h), which consists of a tube with the same diameter as the impingement duct outlet (g2b) but with two lateral perforations (g2f) and one lower central perforation (g2g) that fulfil the objective of channelling the explosion of the jet as shown in figure 5. The output flow of the impingement ducts (g2b) is of the laminar type and is in the range of 20 litres per minute to 5,000 litres per minute, preferably 500 litres per minute. By way of example and without restricting the development, if the flows from two cavitation ducts (g2) with two impingement ducts (g2b), individually with flow rates of 500 litres per minute, collide, they add their speeds in the impingement and together, the flow rate for washing is 1,000 litres per minute.

Cavitation and flow impingement generate an unexpected effect in the present development, which consists in that externally applied oxidising species such as O₂ and O₃ react chemically with subspecies derived from nitrogen, sulphur and other pollutants, partly volatilising this nitrogen, sulphur and other contaminants, as volatile elements in combination with oxygen, thus removing part of this contaminant from the end product. In order to eliminate these volatile contaminants, the cavitation and impingement tank (g) also includes a gas outlet duct (g3d) in its upper part that channels and bubbles the gases in the biological material concentrate and inert impurities tank (G) in order to enrich this residue with the dissolved gases generated in the cavitation and impingement tank (g) in step 14.

The cavitation and impingement tank device also includes a product outlet (g3a) from the flow impingement, a handle (g3b) for maintaining the cavitation ducts and a viewer (g3c) for verifying the operation of the device. In general, the product that comes out of the impingement has a humidity in the range between 85% and 99% w/w on a dry basis, preferably 90% w/w, 98% w/w and 99% w/w.

By gravity, the product resulting from the impingement of flows falls and is positioned on the final granulometric filter device (h) that corresponds to a final device such as a screen, sieve or rotary filter (h), which can vibrate, with a filtering mesh size of 0.25 mm to 2 mm (10 to 60 US mesh), which filters and separates a more homogeneous and finer solid product than the one delivered by the previously mentioned cavitation and impingement device (g), with a humidity range between 70% and 90%, preferably 83%, where the moistened fibres are retained and the liquid with its respective contaminants is filtered a second time. This device is arranged at an angle that ranges from 10° above the horizontal to 80° above the horizontal, preferably 45°. For this second filtration, the screen, sieve and rotary filter type devices are similar to those described for the first granulometric filter. On the other hand, the solid retained in this final filter can be sprayed with recycled water (J) or clean water (L) before passing to the next device.

Finally, and continuing with the handling of solid products, the solid that falls from the impingement of the flows, mentioned above, is deposited by gravity in the hammer mill screw device (j), where this device is a compact piece of equipment that operates with two elements, firstly, an extruder mill element and secondly, a hammer mill element. The first element of the extruder mill is made up of the following interrelated elements, initially the solid falls by gravity and enters through the inlet hopper (j6), this hopper channels the solid through the screw axis (j1) which moves the solid against the tightening system (j8). The screw axis (j1) in turn consists of a pipe with a continuous helix (j1a) with a rotation angle ranging from 15° to 50°, preferably 20° and with a distance between turns of preferably 15 cm, without wanting to restrict other efficient possibilities with this measure, it also includes two pipe end bushings (j1b), with an internal pipe reinforcement (j1c), all mounted on a shaft (j1d), with a shaft end bushing (j1e). The screw shaft (j1) is also supported in the extruder screw element of the hammer mill screw device (j) by a rear support (j2) and mounted on two conical circular bearings (j3) to maintain the movement of the screw shaft (j1), these bearings are fastened to prevent their exit following the line of the axis, by the fastening sleeves (j5), in parallel an o-ring (j4) separates these bearings (j3) from the incoming material in the input hopper (j6).

The solid, moving through the screw axis (j1), before reaching the tightening system (j8), passes through a sieve device (j7), this sieve device (j7) includes the circular sieve itself (j7a) with between 80 and 1000 slides, preferably 112, with measurements, by way of non-limiting example, of 400 mm long, 30 mm wide and 2.5 mm thick, with a mesh size of between 0.05 and 3 mm, supported on a sieve support (j7c) and wrapped in the sieve casing (j7b), which fulfil the function of channelling the water extracted in the tightening and channelling it through the drain (j7f) to be recirculated, retaining the solid in the inner surface of the screening device (j7). This sieve device (j7) is easily removable by means of the sieve handle (j7e) for cleaning, where in addition to extracting the sieve itself (j7a), the device cover (j7d) can be removed.

The previously mentioned tightening system (j8) comprises an area delimited by the covers: upper (j22), upper side (j23) and lower side (j20) that support the accumulation of solid material chopped by means of the blades (j8e) that are tightened on the blade holder (j8a), which in turn is stabilised on the horizontal axis by the spring (j8c), which in turn exerts pressure against the direction of the material via the screw axis (j1). The tightening system to hold onto the extruder mill element of the hammer mill screw device (j), is mounted through a lever-holder (j8b) that holds the lever (j8d), which holds the tightening system (j8) to the entire device in an easy and removable way in case the blades (j8e) need replacing. This tightening system (j8) remains in a firm position without rotating, but allows the screw shaft (j1) to rotate freely, causing the retained solid to be squeezed, increasing the draining time, leaving a more dehydrated solid material.

On the other hand, the tightening system (j8) compresses and shreds the solids and when they partially accumulate on the screw shaft (j1) they release liquid in the sieve device (j7). Most of the solids, however, fall due to pressure and gravity to the grinding unit (j14) or to a traditional hammer mill that corresponds to the second element of the hammer mill screw device (j), where this grinding unit (j14) is made up of a support box (j14c) and a circular output of solid material (j14b), internally it comprises a set of grinding or shredding blades in the shape of a symmetrical cross (j14a) mounted on a tube (j14i), which rotates on a square grinding shaft (j14h), where for this rotation, the grinding shaft (j14h) is positioned between two square base bearings (j14d) at each end of the tube outside the box. The blades rotate due to the energy delivered during the rotation of the pinion (j14f) and due to the pressure exerted by the solid trying to come out due to the restriction generated by a grid (j14g) with a mesh size slightly greater than the thickness of the blade. In order for the grinding assembly to be in position and to rotate freely on its shaft, it also contains a bearing for the grinding assembly support (j14e), which is mounted on the grinding assembly support (j17).

Continuing with the extruder mill element, on the screw axis (j1), after the tightening system (j8), comes the bearing (j9) and the main support (j16) that supports most of the hammer mill screw device (j). Continuing with the same arrangement, comes the pinion area, delimited by the upper cover (j19) and the side covers (j21), this area protects the set of large (j10) and (j11) small pinions mounted on the shaft (j1d), where the large pinion (j10) provides the mechanical energy to the grinding unit (j14). After this comes the reducer motor (j12) that delivers power to the entire hammer mill screw device (j). This motor is directly associated via the standard motor shaft (j13) to the shaft (j1d) to deliver rotation to the entire device, with a speed between 10 to 250 rpm. By way of example, this motor can have a capacity of 10 Hp and a speed of 140 rpm, without limiting the capacity and power of the motor to this specific example. On the other hand, the motor is supported on the motor base (j18) and is positioned by the motor support (j15).

The efficiency of the hammer mill screw device (j) is such that it begins working with solids with moisture around 85% w/w and after all the milling, pressing, shredding and filtering processes it reaches a mixture of fibres with a humidity under 30% w/w, which results in lower energy consumption in later steps for efficient drying of the end product. Also, the size of the final fibre is in the range of 0.595 - 0.297 mm, taking into account 72% of the total sample, which provides a greater surface area for exposure to oxidants and fire in the final combustion of the product, thus improving the efficiency of the final combustion.

Once the by-product leaves the hammer mill screw device (j), it continues with the steps and equipment similar to those mentioned in the previously mentioned patent application by the same inventors.

The solid material is transported through step (16) to the pressing or centrifuging section (O), which eliminates excess water from the material, which is subsequently taken through step (18) which corresponds to a dryer (P), which is fed with hot air through the passage (21) which in turn is fed by the Boiler (Q), then this material falls through the passage (19) onto a dry magnetic vibrating screening device (S) that corresponds to a sieve-type device, similar to the one indicated in step (b) of the washing system (I) but dry, with magnetic bars to trap metals and a sifting mesh size of between 2 mm (10 US mesh) up to 0.595 mm (30 US mesh), which sifts and separates a fine homogeneous powder-type solid product with a moisture range of between 10% and 5%, preferably 7%, where the fragments of larger size and the sieved powder are channelled through pneumatic ducts (20) to the pelletising process (T). This device is arranged at an angle ranging from 10° above the horizontal to 80° above the horizontal, preferably 45°.

The material that has been processed is incorporated into the Pelletising process (T) through step (20) to finally form pellets and/or ligno-cellulose briquettes and/or some other solid form to be burned.

The present development, in addition to cleaning all kinds of impurities from the outside of the fibre, is also capable of cleaning the fibre on the inside, which is full of bacteria, enzymes, gastric juices that are responsible for dissolving cellulose and hemicellulose to transform them into sugars, but when they leave the animal they remain inside the fibre as contaminants and when burned they emit odours and gases that are harmful to health.

The present development is also capable of cleaning the inside and outside of the fibre of silica residues, thus improving the end product by eliminating its ability to vitrify inside boilers and stoves.

To describe the process in the washing system (I) of the present development, eight sub-steps are included, such as: initial and final granulometric filtering, dosing, centripetal or centrifugal movement, water turbulence, optional ozone, cavitation, impingement and hammer mill screw dehydration, continuing with the steps already known in the state of the art, to achieve a double objective, minimum energy consumption in the process by having sub-steps with processes without energy consumption and an end product of high energy power with a minimum of contaminants, especially nitrogen and ash, among others. This system, through granulometric filtering, centripetal or centrifugal movement, water entrainment, optional ozone, cavitation, impingement and mechanical dehydration, manages to release all contaminants both inside and outside the solid components of the slurry and its mixtures, in a continuous process eliminating its contaminants, leaving a solid product with particular characteristics. As previously mentioned, the application of chemical agents is not an option for the present development.

The modifications made to the washing system (I) and its substeps in the total performance of the system are a fundamental part of this development.

The following consecutive sub-steps are performed in the washing system (I):
i) impulsion through the Slurry Pump (a): movement of the slurry from the slurry pit (A) moving the slurry mixture;
ii) initial granulometric filtering: this substep corresponds to an initial filtering by means of a screen, sieve or rotary filter to achieve standardising and slightly reducing the humidity of the solids being processed, in general the solids received have a humidity of less than 85% w/w. The solids obtained are transported by a screw where the percentage of humidity decreases below 80% w/w;
iii) dosage, this substep corresponds to measuring the weight of a quantity of solid to enter the next substep of the process. Mainly, the weight of a quantity of solid is measured by means of an automated basket and its content is released into the washing and humidification tank (v);
iv) centripetal or centrifugal movement with water turbulence and optional ozone injection, we mention these three sub-steps because they take place inside the washing and humidification tank (e). Mainly the fibre-containing mixture is rehydrated through the water inlet (J), which moves and drags the fibre-containing mixture, in parallel as a first alternative, in the centre of the tank a tubular paddle agitator sucks this hydrated mixture and raises it by centripetal movement to the top of the apparatus where it spills out in the centre of said tank. A second alternative is simply an agitator paddle in the centre of the tank, generating a centrifugal effect in the mixture. Optionally, a mixture of water with premixed ozone can be added to the tank in order to eliminate microbiological material and compounds derived from nitrogen, compounds derived from sulphur and other compounds from later sub-steps. For this, the ozone-water mixture is prepared in an attached ozone preparation tank (o), where ozone is bubbled through ozone generating machines (p) in a volume of water (J) between 1,000 L/h up to 320,000 L/h, preferably 33,000 L/h, until reaching a concentration in the range of 900 to 1,200 ppb and this mixture, in turn, is reinjected into the washing and humidification tank (e), as previously mentioned;
v) cavitation and impingement, in this substep, the liquid that comes out of the washing and humidification tank (e) is raised by the previously described cavitation pumps (g1) and the flow passes through the cavitation and impingement tank (g), where through the cavitation duct (g2), the physical reaction of cavitation occurs within the liquid and within the retained moisture contained in the fibres, performing a very high-speed micro-bubbling job, mechanically destabilising contaminants and different types of fibres within the mixture, leaving them ready for their separation in the impingement, between different flows that come from different cavitation ducts (g2) or a single duct and a wall of the cavitation and impingement tank (g). This substep in turn is separated into three phases, the first phase, cavitation of the flow; the second phase, separation and lamination of the flow; and the third phase, flow impingement;
vi) final granulometric filtering: this substep occurs after the impingement substep inside or against the cavitation and impingement tank (g), where the wet solid passes by gravity through a final granulometric filter (h), which corresponds to a final filtering by means of a screen, sieve or rotary filter, which retains the moistened fibres and filters the liquid with its respective contaminants a second time, in general the moistened fibres have a humidity between 80% and 85%; and
vii) dehydration by a hammer mill screw: the wet solid from the previous substep enters a hammer mill screw (j) with a configuration of two elements that first proceeds to push the solid and squeeze it through the extruder screw element, which dehydrates it until left with a mixture of fibres with a moisture content below 30% w/w, and then the second hammer mill element that shreds the resulting solid.
Specifying, the power necessary for the cavitation and impingement step (v) is a cavitation pump power (g1) in a range from 2 Kw to 50 Kw, preferably and by way of example without wanting to limit other capacities of the system, a power of 4 Kw to be able to process 1,200 kg/h of slurry at 80% humidity or higher, leaving the diluted fibre in the range of 0.5% to 5%, preferably 2%, preferably 2.5%, preferably 3%, in water, which is the ideal medium for the cavitation step, with flow rates of, for example, 500 L/min passing through the cavitator tube (g2). As previously mentioned, the fluid to be treated is required to have a predetermined humidity and dilution to be able to operate in the cavitator tube (g2), where within these parameters the ideal is a humidity of 97% and a particle size no greater than 20 mm.

After passing through the cavitation comes the separation and lamination of the flow where the flow is slowed down and its pressure is stabilised. Once the flow is stabilised and laminated, it is released by making the flows collide against each other, this means that if there are only two jets they collide in opposite directions, adding their speed; if there are more than two jets, these collisions are in pairs or in trios neutralising the projection outside by the cavitation and impingement tanks (g).

Another specification is that, to extract the cellulosic fibres and lignin with its derivatives, and as the final part of the washing process, step (vii) uses the hammer mill screw device (j). This screw is also a desiccator screw because it manages not only to move the fibres to the subsequent drying steps, but also to extract the water from the mixture from 98% to 30% w/w (the state of the art generally mentions that screws, in general, leave between 70% to 80% of moisture in the mixture), which saves time and energy when drying the fibres in later steps.

This screw can be used in other drying or moisture reduction processes regardless of the method and field of application of the present development.

To achieve these effects, the hammer mill screw device (j) operates at a high speed of between 20 rpm up to 200 rpm, preferably 140 rpm, preferably 70 rpm, in a small diameter and with internal fibre-breaking blades, as mentioned earlier in their description.

The particle size coming out of the hammer mill screw device (j) is in a low range of 0.595 - 0.149 mm.

With respect to the end product obtained as pellets or briquettes for burning, according to Table I it comprises:

**Table I:**

| | Unit | Range |
|---|---|---|
| Higher Calorific Power | (kcal/kg) | 4,200 - 5,700 |
| Lower Calorific Power | (kcal/kg) | 4,000 - 5,300 |
| Total Humidity | (w/w %) | 1-10 |
| Ash | (w/w %) | 0 - 3 |
| Sulphur | (w/w %) | 0 - 0.2 |
| Nitrogen | (w/w %) | 0-0.5 |
| Particle Size | (mm) | 0.595 - 0.297 |

### Description of the Figures

Figure 1:

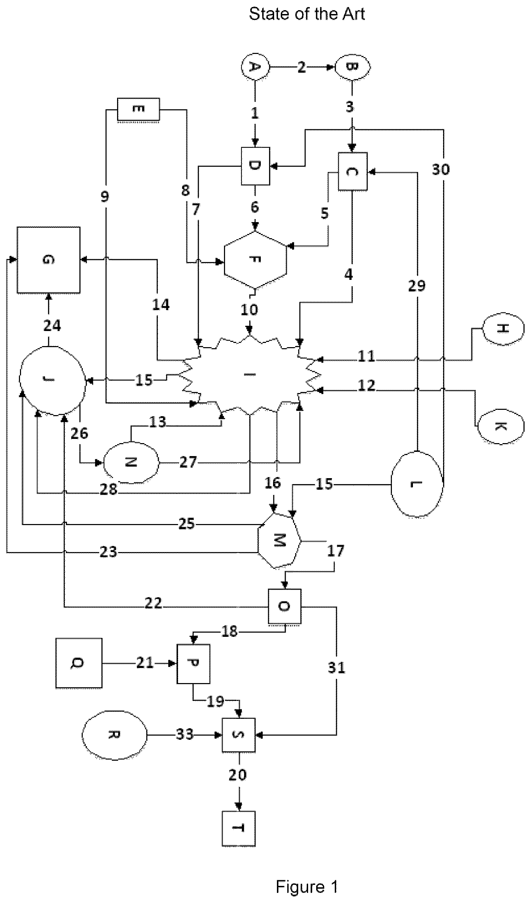

   Figure 1 shows a block diagram of the state of the art of application WO2017/181299for the treatment of slurry to obtain lignocellulose as a raw material and/or fuel and other chemical components. Operations are shown in blocks, flow lines or streams are represented with arrows which indicate flow direction and are also represented by numbers.
Figure 2:
   This figure describes a diagram with the steps of the present development and how they are partly related to steps of the previous state of the art.
Figure 3:
   This figure presents only a diagram of the component elements of the washing system (I). Where they are indicated according to their numbering:
   A: slurry pit
   b: initial screen, sieve or rotary filter type device
   c: feeder screw device
   d: dosing device
   e: washing and humidification tank
   e1: inlet for washing water
   e2: entry point for the solid
   e3: tubular paddle agitator
   e4: level transfer output
   G: biological material concentrate and inert impurities tank
   g: cavitation and impingement tanks
   g1: cavitator pumps
   g2: cavitation ducts
   g3d: gas outlet duct
   h: final screen, sieve or rotary filter type device
   j: hammer mill screw device
   p: ozone-generating machines
   o: attached tank for ozone preparation
   O: press or centrifuge
Figure 4:
   This figure shows the cavitation and impingement tank (g), its cavitation duct (g2a), the relationship of its internal components, between the cavitation and laminar flow duct (g2a) and the impingement duct (g2b) and its different parts. The numbers indicate:
   g: cavitation and impingement tank
   g2: cavitation ducts
   g2a: cavitation and laminar flow duct
   g2aa: first nozzle section
   g2ab: flow load section
   g2ac: diffuser section
   g2ad: inlet duct diameter
   g2ae: internal diameter reduction
   g2b: impingement duct
   g2ba: separation section
   g2bb: output reduction section
   g2bc: output section
   g2bd: top diameter
   g2f: side perforations
   g2g: central bottom perforation
   g2h: steering and impingement tube
   g3a: product output
   g3b: handle
   g3c: viewer
   g3d: gas outlet duct
Figure 5:
   This figure shows the angle of collision of the jets coming out of two impingement ducts (g2b) and how they behave when they leave the device.
Figure 6:
   This figure shows the hammer mill screw device (j), showing all its parts and pieces, where the numbers indicate:
   j1: screw shaft
   j1a: pipe with helix
   j1b: pipe end bushings
   j1c: internal pipe reinforcement
   j1d: shaft
   j1e: shaft end bushing
   j2: rear support
   j3: circular bearings
   j4: o-ring
   j5: clamping sleeves
   j6: input hopper
   j7: sieve device
   j7a: circular sieve
   j7b: sieve casing
   j7c: sieve support
   j7d: device cover
   j7e: sieve handle
   j7f: drain
   j8: tightening system
   j8a: blade holder
   j8b: lever holder
   j8c: spring
   j8d: lever
   j8e: blades
   j9: bearing
   j10: large pinion
   j11: small pinion
   j12: reducer motor
   j13: standard motor shaft
   j14: grinding assembly
   j14a: symmetrical cross-shaped grinding blades
   j14b: circular output for solid material
   j14c: support box
   j14d: square base bearings
   j14e: grinding assembly support bearing
   j14f: grinding assembly pinion
   j14g: grid
   j14h: square grinding shaft
   j14i: tube
   j15: motor support
   j16: main support
   j17: grinding assembly support
   j18: motor base
   j19: upper cover of the pinion area
   j20: lower side cover of the tightening system
   j21: side covers of the pinion area
   j22: upper cover of the tightening system
   j23: upper side cover of the tightening system

### Example of Application

This example was developed in the slurry pits of the Las Garzas agricultural laboratory.

On August 17, 2020, 5450 kg of mainly bovine slurry were used and the procedure of the present development was applied. The cleaning water used comes from a well in the area, with water with a high content of dissolved salts.

Slurry and manure samples were taken initially, delivering the following summary of analytical results, as shown in Table II:

**Table II:**

| Parameter measured | Unit of measurement | Slurry pit | Manure |
|---|---|---|---|
| Higher Calorific Power | (kcal/kg) | 3,376 | 3,571 |
| Lower Calorific Power | (kcal/kg) | 3,107 | 3,277 |
| Lignin | (%) | 2.4 | 24.7 |
| Cellulose and hemicellulose | (%) | 4.5 | 45 |
| Particle size | (mm) | NS | 10 - 0.595 (67% of particles) |
| Total Humidity | (%) | 89.21 | 9.13 |
| Ash | (%) | 18.5 | 26.57 |

| RAW MATERIAL COMPOUNDS | | | |
|---|---|---|---|
| Sulphur | (%) | 0.3563 | 0.3598 |
| Carbon | (%) | 40.76 | 42.98 |
| Hydrogen | (%) | 5,242 | 5,687 |
| Nitrogen | (%) | 1.797 | 2.908 |
| Oxygen | (%) | NS | NS |
| Mn (Manganese) | (ppm) | 130.43 | 166.45 |
| As (Arsenic) | (ppm) | <0.01 | <0.01 |
| Pb (Lead) | (ppm) | <0.01 | <0.01 |
| Cu (Copper) | (ppm) | 29.63 | 42.47 |
| Cr (Chromium) | (ppm) | 6.95 | 10.95 |
| Cd (Cadmium) | (ppm) | 1.042 | 0.89 |
| Mo (Molybdenum) | (ppm) | 4,866 | 7.42 |
| Hg (Mercury) | (ppb) | 1.2 | 1.0 |
| Ni (Nickel) | (ppm) | 2.829 | 6,818 |
| V (Vanadium) | (ppm) | 11,121 | 4,113 |
| Co (Cobalt) | (ppm) | 0.547 | 0.348 |
| Zn (Zinc) | (ppm) | 70,056 | 121,442 |
| Sb (Antimony) | (ppm) | <0.01 | <0.01 |

| ASH COMPOUNDS | | | |
|---|---|---|---|
| SiO₂ | (%) | NS | 1.23 |
| Other compounds | (%) | | 22.42 |
| TOTAL | (%) | NS | 23.65 |

After passing the slurry through this process, the final pellet of the same was also sampled, delivering the following analytical results, according to Table Ill:

**Table III:**

| Parameter measured | Unit of measurement | Pellets |
|---|---|---|
| Higher Calorific Power | (kcal/kg) | 4,550 |
| Lower Calorific Power | (kcal/kg) | 4,219 |
| Lignin | (%) | 35.6 |
| Cellulose and hemicellulose | (%) | 62.7 |
| Particle size | (mm) | 0.595 - 0.297 (72% of particles) |
| Total Humidity | (%) | 6.96 |
| Ash | (%) | 1.7 |

| RAW MATERIAL COMPOUNDS | | |
|---|---|---|
| Sulphur | (%) | 0.14 |
| Carbon | (%) | 50.23 |
| Hydrogen | (%) | 5.97 |
| Nitrogen | (%) | 0.44 |
| Oxygen | (%) | NS |
| Mn (Manganese) | (ppm) | 51 |
| As (Arsenic) | (ppm) | <0.01 |
| Pb (Lead) | (ppm) | 12.2 |
| Cu (Copper) | (ppm) | 13.23 |
| Cr (Chromium) | (ppm) | 3.13 |
| Cd (Cadmium) | (ppm) | <0.01 |
| Mo (Molybdenum) | (ppm) | 7.42 |
| Hg (Mercury) | (ppb) | 1.2 |
| Ni (Nickel) | (ppm) | 2.98 |
| V (Vanadium) | (ppm) | 2.03 |
| Co (Cobalt) | (ppm) | <0.01 |
| Zn (Zinc) | (ppm) | 29.49 |
| Sb (Antimony) | (ppm) | <0.01 |
| Cl (Chlorine) | (ppm) | 70 |

| ASH COMPOUNDS | | |
|---|---|---|
| SiO₂ | (%) | 1.21 |
| Other Compounds | (%) | 19.29 |
| TOTAL | (%) | 20.5 |

For the comparative calculation of the reduction of Silicon, it should be taken into account that the percentage of Silicon varies fundamentally in relation to the percentage of Ash, and the latter with respect to the total product.

The following processes were used for the analyses under international standard conditions as shown in Table IV:

**Table IV:**

| Test | Methods |
|---|---|
| Sample preparation | UNE-CEN/TS 14780 EX Applicable: solid biofuels |
| Ash | UNE-EN 14775 |
| Elemental analysis (C, H, N) | EN 15104 |
| | Applicable: solid biofuels |
| Sulphur content | EN 15289 |
| | Applicable: solid biofuels |
| Determination of major elements in biomass by ICP-OES (Ca, Al, Mg, K, Na, Si, P, Ti, S, Fe) | UNE EN 15290 |
| Determination of minority elements in biomass by ICP-OES (Cr, Cu, Zn, Pb, As, Mo, V, Mn, Ni, Cd, Co, Sb) | UNE EN 15297 |
| Sample digestion (for majority and minority elements) | UNE EN 15290 |
| Determination of minority elements in biomass by | UNE-EN 15297, December 2011 Applicable: Solid biofuels |
| Hydride Generation AAG Arsenic Determination | I-L-094, based on the Manual of the AAS AAnalyst 400 (quantification) equipment |
| Determination of minor elements in biomass by Cold | UNE-EN 15297, December 2011 Applicable: Solid biofuels (digestion) |
| Vapour AAS Determination of Mercury | I-L-089, Determination of Mercury by Cold Vapour Atomic |
| | Absorption Spectroscopy |

The following Table VIII shows the analyses performed on the reactants and products of the patent application by the same inventor WO2017/181299.

**Table VIII:**

| STANDARDS USED | | |
|---|---|---|
| ASTM D3172-13 | Standard Practice for Proximate Analysis of Coal and Coke | http://www.astm.org/Standards/D3172.htm |
| ASTM D4239 - 14e2 | Standard Test Method for Sulfur in the Analysis Sample of Coal and Coke Using High-Temperature Tube Furnace Combustion | http://www.astm.org/Standards/D4239.htm |
| ASTM D4239 - 14e2 | Standard Test Method for Sulfur in the Analysis Sample of Coal and Coke Using High-Temperature Tube Furnace Combustion | http://www.astm.org/Standards/D4239.htm |
| UNE-EN 14774-1:2010 | Solid biofuels. Determination of moisture content. Oven drying method. Part 1: Total humidity. | http://www.aenor.es/aenor/normas/normas/ fichanorma.asp?tipo=N&codigo=N0045726 #.VxD5C6jhDIU |
| | Reference method. | |
| UNE-EN 14775:2010 | Solid biofuels. | http://www.aenor.es/aenor/normas/normas/ fichanorma.asp?tipo=N&codigo=N0045971 #.VxEDa6jhDIU |
| | Method for the determination of ash content. | |
| UNE-EN 14918:2011 | Solid biofuels. | http://www.aenor.es/aenor/normas/normas/ fichanorma.asp?tipo=N&codigo=N0046857 #.VxD8BqjhDIU |
| | Determination of calorific value. | |
| UNE-EN 15104:2011 | Solid biofuels. | http://www.aenor.es/aenor/normas/normas/ fichanorma.asp?tipo=N&codigo=N0048348 #.VxD8X6jhDIU |
| | Determination of total carbon, hydrogen and nitrogen content. Instrumental methods. | |
| UNE-EN 15104:2011 | Solid biofuels. | http://www.aenor.es/aenor/normas/normas/ fichanorma.asp?tipo=N&codigo=N0048440 #.VxD-GqjhDIU |
| | Conversion of analytical results from one base to another. | |
| UNE-EN 15148:2010 | Solid biofuels. | http://www.aenor.es/aenor/normas/normas/ fichanorma.asp?tipo=N&codigo=N0045972 #.VxD5hajhDIU |
| | Determination of volatile matter content | |
| UNE-EN 15289:2011 | Solid biofuels. | http://www.aenor.es/aenor/normas/normas/ fichanorma.asp?tipo=N&codigo=N0048352 #.VxEGcqjhDIU |
| | Determination of total sulphur content. | |
| UNE-EN 15296:2011 | Solid biofuels. | http://www.aenor.es/aenor/normas/normas/ fichanorma.asp?tipo=N&codigo=N0048507 #.VxD2xqjhDIU |
| | Determination of minority elements. As, Cd, Co, Cr, Cu, Hg, Mn, Mo, Ni, Pb, Sb, V and Zn | |
| UNE-EN 15297:2011 | Solid biofuels. | http://www.aenor.es/aenor/normas/normas/ fichanorma.asp?tipo=N&codigo=N0048352 #.VxD4tKjhDIU |
| | Determination of the total content of minor elements, mercury and arsenic | |

Particle size was measured under standard EN 15149-1, by the transfer of particles through different sieves and the weight of the material retained in each one for the product that was being measured, in order to calculate the majority percentage retention for a range of particle sizes.

The measurement of lignin, cellulose and hemicellulose was carried out based on standard ASTM D-1106.

As can be seen by comparing the results of Tables II and III, the step of the washing system achieves toxicity parameters (referring to the chemical elements that can produce risks) that are much lower than those already known, also, in the final pellet silica, particle size and nitrogen levels are achieved that are extremely lower than those of origin.

Regarding the process, apart from having more efficient steps with respect to washing the fibre and the end product, energy consumption is unusually lower compared to the state of the art with respect to particle size. This is due to the use of energetically passive steps for the fibre washing process. This can be verified comparatively in the following Table V:

**Table V:**

| Power of installed process equipment | | | | |
|---|---|---|---|---|
| ITEMISED SECTION | kW Installed power | | Operating kW | |
| | WO2017/181 299 | Development Process | WO2017/181 299 | Development Process |
| Purine pump (a) | 4 | 4 | 3 | 3 |
| Traditional Extruder Screw (F) | 4 | 0 | 3 | 0 |
| Gutter | 0 | 0 | 0 | 0 |
| Agitator Tank | 4 | 0 | 3 | 0 |
| Screen (b) | 0 | 0.25 | 0 | 0.1875 |
| Traditional Extruder Screw (c) | 2 | 2 | 1.5 | 1.5 |
| Dispenser (d) | 0.5 | 0.5 | 0.375 | 0.375 |
| Humidifier (e) | 0.75 | 2 | 0.5625 | 1.5 |
| Cavitating Impingement (g) | 0 | 4 | 0 | 3 |
| Ultrasound | 8 | 0 | 6 | 0 |
| Ultrasound tank | 2.5 | 0 | 1.875 | 0 |
| Screen or Sieve (h) | 0 | 0.25 | 0 | 0.1875 |
| Rotary Separator 1 | 1 | 0 | 0.75 | 0 |
| IBC 1 | 2.2 | 0 | 1.65 | 0 |
| Rotary Separator 2 | 1 | 0 | 0.75 | 0 |
| IBC 2 | 2.2 | 0 | 1.65 | 0 |
| Flocculation tank | 2.2 | 0 | 1.65 | 0 |
| Water Tank | 2.2 | 2.2 | 1.65 | 1.65 |
| Ozone (p) | 2 | 2 | 2.25 | 2.25 |
| Hammer mill screw (j) | 0 | 7.5 | 0 | 5,625 |
| Traditional Screw | 4 | 0 | 3 | 0 |
| Total | 44 | 26 | 33 | 19 |
| Percentage moisture in Biomass Output | 75% | 30% | 75% | 30% |
| Percentage decrease in Power kW | 59% | | 59% | |

As can be seen, the decrease in energy by the new development is verified as 59%, with a 40% decrease in the percentage of water in the end product obtained.

When analysing the result above, we consider that the cavitation and subsequent impingement steps are passive steps of lower energy consumption with respect to the ultrasound indicated in the state of the art. On the other hand, the hammer mill screw dehydration step is highly efficient in dehydrating the fibres, leading to a lower energy consumption in the dryer. The product can be compared before the dryer operation of application PCT/CL2017/00009, where the humidity range was between 65% to 75% w/w; on the other hand, the current humidity range handled before the dryer is in the range of 30% to 35% w/w. If you add to this a smaller average particle size range for the current product, it results in almost 71% less energy consumption by the dryer.

On the other hand, to verify the energy efficiency of the hammer mill screw (j) of this process, the efficiency of the device with respect to its energy consumption was verified, as seen in Table VI:

**Table VI:**

| Screw hammer mill performance per 100 kg expressed in dry matter | | | | | |
|---|---|---|---|---|---|
| % Moisture in slurry sample | Kilos of Dry Matter | Litres of water | kW necessary to obtain 100 kg dry matter (motor power) | heat energy to evaporate water from 10 °C in Kcal | heat energy to evaporate water from 10 °C in kW |
| 90% | 100 | 900 | 0.05 | 570,780 | 664 |
| 85% | 100 | 567 | 0.08 | 360,990 | 420 |
| 80% | 100 | 400 | 0.54 | 255,780 | 297 |
| 75% | 100 | 300 | 1.00 | 192,780 | 224 |
| 70% | 100 | 233 | 1.46 | 150,570 | 175 |
| 65% | 100 | 186 | 1.91 | 120,960 | 141 |
| 60% | 100 | 150 | 2.37 | 98,280 | 114 |
| 55% | 100 | 122 | 2.83 | 80,640 | 94 |
| 50% | 100 | 100 | 3.29 | 66,780 | 78 |
| 45% | 100 | 82 | 3.74 | 55,440 | 64 |
| 40% | 100 | 67 | 4.20 | 45,990 | 53 |
| 35% | 100 | 54 | 4.66 | 37,800 | 44 |
| 30% | 100 | 43 | 5.12 | 30,870 | 36 |
| 25% | 100 | 33 | 5.58 | 24,570 | 29 |
| 20% | 100 | 25 | 6.00 | 19,530 | 23 |
| 15% | 100 | 18 | | 15,120 | 18 |
| 10% | 100 | 11 | | 10,710 | 12 |
| 5% | 100 | 5 | | 6,930 | 8 |
| 0% | 100 | - | | | 0 |

Table VI shows the great convenience of using the hammer mill screw, because the state of the art discloses, in general, screws that obtain 75% humidity in the end product at a power of 1 kW for every 100 kg of dry matter, which means that 300 litres of water have to be evaporated with an caloric energy cost of 224 kW to obtain the dry matter. The high efficiency hammer mill screw (j) achieves a range of between 30% and 35% moisture in the material with 5.12 kW of power per 100 kg of product at equivalent dry matter and with a quantity of 43 litres of water to evaporate which is equivalent to 36 kW of heat energy. This means that the high efficiency hammer mill screw (j) in this case obtains a caloric energy saving of 184.12 kW.

Finally, a comparative chemical analysis of the pellets produced by the process closest to the state of the art WO2017/181299 and the pellets produced by the present development was carried out, as can be seen in the following Table VII:

**Table VII:**

| Parameter measured | Unit of measurement | Dung or Raw Material | Solid-liquid separation according to Publication Number WO 2015086869 A1 | Product obtained through application WO2017/1812 99 | Product obtained through the process of the present development |
|---|---|---|---|---|---|
| Higher Calorific Power | (kcal/kg) | 3,906 | 3,602 | 4,545 | 4,550 |
| Lower Calorific Power | (kcal/kg) | 3,639 | 3,350 | 4,228 | 4,219 |
| Lignin | (%) | 24.7 | NS | 28 | 35.6 |
| Cellulose and hemicellulose | (%) | 45 | NS | 67.97 | 62.7 |
| Particle size | (mm) | 10 - 0.595 (67% of particle s) | NS | 2 - 0.595 (84% of particles) | 0.595 - 0.297 (72% of particles) |
| Total Humidity | (%) | 8.58 | 6.18 | 6.52 | 6.96 |
| Ash | (%) | 24.13 | 24.55 | 4.03 | 1.7 |

| RAW MATERIAL COMPOUNDS | | | | | |
|---|---|---|---|---|---|
| Sulphur | (%) | 0.29 | 0.21 | 0.11 | 0.14 |
| Carbon | (%) | 37.76 | 36.45 | 46.62 | 50.23 |
| Hydrogen | (%) | 5.14 | 4.84 | 6.07 | 5.97 |
| Nitrogen | (%) | 2.35 | 0.91 | 0.61 | 0.44 |
| Oxygen | (%) | 29.99 | 32.98 | 41.17 | NS |
| Mn (Manganese) | (ppm) | 295 | 245 | 78.81 | 51 |
| As (Arsenic) | (ppm) | <50 | <50 | <50 | <0.01 |
| Pb (Lead) | (ppm) | <50 | <50 | <50 | 12.2 |
| Cu (Copper) | (ppm) | 109 | <50 | <50 | 13.23 |
| Cr (Chromium) | (ppm) | <50 | <50 | <50 | 3.13 |
| Cd (Cadmium) | (ppm) | <50 | <50 | <50 | <0.01 |
| Mo (Molybdenum) | (ppm) | <50 | <50 | <50 | 7.42 |
| Hg (Mercury) | (ppb) | 1.0 | NS | NS | 1.2 |
| Ni (Nickel) | (ppm) | <50 | <50 | <50 | 2.98 |
| V (Vanadium) | (ppm) | 55 | 75 | <50 | 2.03 |
| Co (Cobalt) | (ppm) | <50 | <50 | <50 | <0.01 |
| Zn (Zinc) | (ppm) | 131 | 53 | <50 | 29.49 |
| Sb (Antimony) | (ppm) | <50 | <50 | <50 | <0.01 |
| CI (Chlorine) | (ppm) | 3445.8 8 | 740.63 | 100 | 70 |

| ASH COMPOUNDS | | | | | |
|---|---|---|---|---|---|
| SiO₂ | (%) | 2.93 | 7.02 | 2.89 | 1.21 |
| Other Compounds | (%) | 53.18 | 53.98 | 45.75 | 19.29 |
| TOTAL | (%) | 56.11 | 61 | 48.64 | 20.5 |

Based on the results shown above, we show below in Table I the ranges for higher calorific value, lower calorific value, total humidity and relevant toxic compounds expected from the product generated by the method of the present development:

**Table I:**

| | Unit | Range |
|---|---|---|
| Higher Calorific Power | (kcal/kg) | 4200 - 5700 |
| Lower Calorific Power | (kcal/kg) | 4000 - 5300 |
| Total Humidity | (w/w %) | 1-10 |
| Ash | (w/w %) | 0 - 3 |
| Sulphur | (w/w %) | 0 - 0.2 |
| Nitrogen | (w/w %) | 0-0.5 |
| Particle Size | (mm) | 0.595 - 0.297 |

| | | |
|---|---|---|
| Where (w/w %) corresponds to percentage in dry weight. | | |

## Claims

1. A continuous method for obtaining a solid fuel comprising ligno-cellulose based on biological material, with a low energy consumption from cattle manure, wherein this biological material is fed to a washing system (I), where after this biological material passes through the washing system (I), the organic material is transported through a passage (16) where it is pressed or centrifuged (O), eliminating excess water from the material, which is subsequently taken through a passage (18) to a dryer (P), which is fed with a current of hot air generated by a boiler (Q) through a passage (21), where then through a passage (19) the material is sieved and/or passed through dry vibration magnetism (S), where this powder-like organic material can then be pelletised (T) through a passage (20) and/or formed into briquettes (T) and/or be kept as powder without pelletising, **characterised in that** the following consecutive steps are performed in the washing system (I):
i) impulsion through a slurry pump (a);
ii) initial granulometric filtering;
iii) dosage;
iv) centripetal or centrifugal movement with water turbulence and optional injection of ozone; inside a washing and humidification tank (e);
v) cavitation and impingement;
vi) final granulometric filtering;
vii) dehydration by screw hammer mill (j).
wherein, the dehydration stage (vii), compresses the fibre between the first extruder mill element and disperses it with the hammer mill element, generating percentages lower than 30% moisture by dry weight of the fibre.

2. The continuous method for obtaining a solid fuel comprising ligno-cellulose based on biological material, with a low energy consumption from cattle manure, according to claim 1, **characterised in that** the initial granulometric filtration (ii) and the final granulometric filtration (vi) steps filter a solid with a filter mesh size of 0.841 mm to 2 mm for the first filtration, and a solid with a filter mesh size of 0.25 mm to 2 mm for the second filtration, where optionally in both steps (ii) and (vi) the filtering is accompanied with vibration.

3. The continuous method for obtaining a solid fuel comprising ligno-cellulose based on biological material, with a low energy consumption from cattle manure, according to claim 1, **characterised in that** the cavitation and impingement step (v) is a passive or a very low energy consumption step based only on the consumption of a cavitator pump (g1), achieving in milliseconds a pressure drop of over 50% with respect to the inlet pressure in this step, where cavitation is produced aerobically and/or with ozone, generating gaseous products that are extracted and channelled for later use, where cavitation also optimises the processes of internal and external cleaning and sanitisation of the fibre, where in addition the liquid that will pass through cavitation has a diluted fibre content in the range of 0.5% to 5%, where in addition the flow impingement is preferred between flows in opposite directions or against a plate, with a distance between flows or between the flow and the plate of between 1 cm to 200 cm, following the relationship that the smaller the distance the greater the shredding of the fibre.

4. The continuous method for obtaining a solid fuel comprising ligno-cellulose based on biological material, with a low energy consumption from cattle manure, according to claim 1, **characterised in that** the slurry pump (a) of the washing system (I) drives the material from a slurry pit (A) through a solid/liquid separator (C), to then deposit the wet solid on an initial device of the screen, sieve or rotary filter type (b), wherein the solid filters the liquids mainly and then the solid falls on a screw feeder hopper (c) that deposits the content in a dispenser (d), wherein the amounts of fiber to be hydrated in the washing and humidification tank (e) are sectioned , wherein this solid is stirred with water and ozone is optionally applied from an annexed ozone preparation tank (o) to be later extracted to a shock-cavitation tank (g), wherein jets are made to cavitate and shock with each other or against a plate to shred the fiber internally and externally, wherein then the wet solid is sieved on a final device of the screen, sieve or rotary filter type (h) to finally extrude and disperse the same solid with the hammer mill drill element (j), to finally deliver it to the last drying steps, wherein the washing and humidification tank (e) comprises a tank with a capacity of 5 to 100 m³, with an inlet for the washing water (e1) that can go above or below the tank, and through this inlet, the optional injection of ozone (O₃), with a second inlet point for the solid (e2) to be treated, wherein in the center of the tank, a tubular bladed stirring apparatus (e3) is provided, wherein at the same time, the washing water from the first injection (e1) generates a stream that drags the solid separating it in combination with the effect of the aforementioned centripetal movement, wherein, optionally, the content of said washing and humidification (e) can be simply centrifugally stirred from the center by means of blades with the corresponding washing water from the first inlet (e1) generating a stream that drags and separates the solid, wherein the excess liquid in said washing and humidification tank (e) is also discharged through the level transfer outlet (e4), in the upper part of the washing and humidification tank (e), transferring the content back to the slurry pit or tanker (A), wherein the washing and wetting tank (e) also performs the function of homogenizing and degassing the excess ozone (O₃).

5. The continuous method for obtaining a solid fuel comprising ligno-cellulose based on biological material, with a low energy consumption from cattle manure, according to claim 4, **characterised in that** the initial (b) and final (h) devices of the screen, sieve or rotary filter type comprise an initial filter beam of light between 2 mm and 0.841 mm and a final filter beam of light between 2 mm and 0.841 mm, with the possibility of having one or more subsequent or parallel filters, and with the possibility of having vibration.

6. The continuous method for obtaining a solid fuel comprising ligno-cellulose based on biological material, with a low energy consumption from cattle manure, according to claim 4, **characterised in that** the transfer of solids from the washing and humidification tank (e) is by means of cavitator pumps (g1) to the cavitation and impingement basin (g) comprising cavitation and impingement duct(s) (g2), which in turn comprise two main interconnected structures, the cavitation and laminar flow duct (g2a) and the impingement duct (g2b), wherein the cavitation and laminar flow duct (g2a) comprises a tubular shaped structure with tapered internal and external diameters, wherein internally the cavitation ducts (g2) comprise three sections, arranged from where the waste flow enters to where it exits, starting with the diameter of the inlet duct (g2ad) in the first nozzle section (g2aa) where the internal diameter of the cavitation duct (g2) is tapered with a nozzle angle between 15° and 35°, where this tapering of the internal diameter (g2ae) of the cavitation duct (g2), goes from a slight reduction of the inlet internal diameter of the cavitation duct (g2) to 1/5 of the internal diameter, after which comes the second flow load section (g2ab), which maintains a constant internal diameter in relation to the tapering of the internal diameter of the previous section, then comes the third and last section of the diffuser (g2ac) where the internal diameter of the cavitation duct (g2) widens again at an angle between 5° and 10° until it reaches the same inlet diameter (g2ad) of the cavitation duct (g2), this is where the cavitation effect is generated as the flow passes the edge of the angle formed when the diameter of the duct expands, generating a sudden pressure drop with the production of micro bubbles in the fluid and its coalescence, where continuing in the direction of the flow, a second element called a impingement duct (g2b) is connected comprising three sections, where the first section maintains the same internal diameter of the inlet (g2ae) to the cavitation duct (g2) and is called a separation section (g2ba), where it is given a physical space for the waste component elements to separate, and then the outlet reduction section (g2bb) is connected, where the inlet diameter (g2ad) is reduced to a larger diameter (g2bd) with respect to the reduction diameter (g2ae) of the flow load section (g2ab), in the range of 45% to slightly less than the internal diameter of the cavitation duct (g2), where the angle of the reduction in this section is in the range of 25° to 35°, then comes the outlet section (g2bc), which guides the outlet jet into the cavitation and impingement basin (g) where two outlet jets are then impinged against each other, or one outlet jet against one of the basin walls, or against a foil or baffle, where the direction of impingement between jets is preferably head on, although it can be angled if there are more than two jets, at a distance between 1 cm to 200 cm, where the capacity to shred the fibres of the jets is indirectly related to the distances between the impingement ducts (g2b), where to improve the frontal impingement of two jets the steering and impingement tube (g2h) is arranged, which consists of a tube with the same diameter as the impingement duct outlet (g2b) but with two lateral perforations (g2f) and a lower central perforation (g2g) that fulfil the objective of channelling the impingement explosion and the fall of the solid by product outlet (g3a), where also for the elimination of these volatile contaminants, the cavitation and impingement tank (g) includes in its upper part a gas outlet duct (g3d) that channels and bubbles the gases into the biological material concentrate and inert impurities tank (G), finally, the cavitation and impingement tank (g) has a handle (g3b) for maintenance of the cavitation ducts and a viewer (g3c) to check the operation of the device.

7. The continuous method for obtaining a solid fuel comprising ligno-cellulose based on biological material, with a low energy consumption from cattle manure, according to claim 4, **characterised in that** the hammer mill screw device (j) of the washing system (I) is a compact device operating with two elements, firstly an extruder mill element and secondly a hammer mill element, wherein the first extruder mill element comprises the following interrelated elements, an inlet hopper (j6) that channels the solids through the screw shaft (j1) which moves the solids against the tightening system (j8), wherein the screw shaft (j1) in turn comprises a continuous helix pipe (j1a) with an angle of rotation ranging from 15° to 50°, further comprising two pipe end bushings (j1b), with an inner pipe reinforcement (j1c), all mounted on a shaft (j1d), with a shaft end bushing (j1e), wherein the screw shaft (j1) is also supported in the extruder screw element of the hammer mill screw device (j) by a rear support (j2) and mounted on two tapered circular bearings (j3) to maintain the movement of the screw shaft (j1), these bearings being held to prevent their run-out following the line of the shaft, by clamping sleeves (j5), in parallel an o-ring (j4) separates these bearings (j3) from the material entering the inlet hopper (j6), following the screw shaft (j1), before reaching the clamping system (j8), it passes through a screening device (j7), comprising a circular screen (j7a) with between 80 and 1000 platens, with a mesh size between 0.05 and 3 mm, supported on a screen support (j7c) and enclosed in the screen casing (j7b), which channels the water extracted in the squeezing through the drain (j7f) to be recirculated, retaining the solids on the surface wherein the screen device (j7) is easily removable by means of the screen handle (j7e) and the removal of the device cover (j7d) for cleaning, wherein the tightening system (j8) is bounded by the upper (j22), upper side (j23) and lower side (j20) covers which support the accumulation of solid material shredded by means of the blades (j8e) which are fastened to the blade holder (j8a), which in turn is stabilised on the horizontal axis by the spring (j8c), which in turn exerts pressure against the direction of the material by the screw shaft (j1), where to be attached to the extruder mill element of the hammer mill screw device (j), it is mounted through a lever holder (j8b) which holds the lever (j8d), which holds the tightening system (j8) to the entire device in case the blades (j8e) need to be replaced, wherein the tightening system (j8) compresses and shreds the solids and these accumulate partly on the screw shaft (j1), releasing liquid into the sieve device (j7), however, most of the solids fall by pressure and gravity into the grinding assembly (j14) or a traditional hammer mill corresponding to the second element of the hammer mill screw device (j), wherein this grinding assembly (j14) comprises a support housing (j14c) and a circular outlet of solid material (j14b), wherein internally it comprises a set of symmetrical cross-shaped grinding or shredding blades (j14a) mounted on a tube (j14i), which rotates about a square grinding shaft (j14h), wherein for this rotation, the grinding shaft (j14h) is positioned between two square-based bearings (j14d) at each end of the tube outside the housing, where the blades are rotated by the energy delivered by the rotation of the pinion (j14f) and by the pressure exerted by the solid as it is forced out by the restriction generated by a grate (j14g) with a mesh size slightly greater than the thickness of the blade, where, in order for the grinding assembly to be in position and for its shaft to freely rotate, it also contains a grinding assembly support bearing (j14e), which is mounted on the grinding assembly support (j17), on the screw shaft (j1), after the tightening system (j8), comes the bearing (j9) and the main support (j16) which holds most of the hammer mill screw device (j), then comes the pinion area, delimited by the top cover (j19) and the side covers (j21), this area protects the large (j10) and small (j11) pinion set mounted on the shaft (j1d), where the large pinion (j10) provides the mechanical power to the grinding assembly (j14), after this comes the gear motor (j12) which delivers power to the whole hammer mill screw device (j), where this motor is directly associated by means of a standard motor shaft (j13) to the shaft (j1d) to deliver the rotation to the whole device, where finally, the motor is supported on the motor base (j18) and is positioned by the motor support (j15).

## Patentansprüche

1. Kontinuierliches Verfahren zum Erhalten eines festen Kraftstoffs umfassend Lignocellulose basierend auf biologischem Material, mit einem niedrigen Energieverbrauch, aus Kuhdung, wobei dieses biologische Material in ein Waschsystem (I) eingespeist wird, wobei, nachdem dieses biologische Material durch das Waschsystem (I) durchgeht, das organische Material durch einen Durchgang (16) transportiert wird, in welchem es gepresst oder zentrifugiert (O) wird, unter Beseitigung des überschüssigen Wassers aus dem Material, welches danach durch einen Durchgang (18) zu einem Trockner (P) gebracht wird, welches mit einem Strom von Heißluft, welche von einem Kessel (Q) erzeugt wird, durch einen Durchgang (21) gespeist wird, wobei dann das Material durch einen Durchgang (19) gesiebt wird und/oder durch trockenen Schwingungsmagnetismus (S) durchgeführt wird, wo dieses pulverförmige organische Material dann durch einen Durchgang (20) pelletisiert (T) werden kann und/oder zu Presslinge (T) gebildet werden kann und/oder als Pulver ohne Pelletisierung gehalten werden kann, **dadurch gekennzeichnet, dass** die folgenden aufeinanderfolgenden Schritte im Waschsystem (I) durchgeführt werden:
i) Antrieb durch eine Jauchepumpe (a);
ii) anfängliche granulometrische Filterung;
iii) Dosierung;
iv) zentripetale oder zentrifugale Bewegung mit Wasserverwirbelung und wahlweise Einspritzung von Ozon; innerhalb eines Wasch- und Befeuchtungstanks (e);
v) Kavitation und Aufprall;
vi) endliche granulometrische Filterung;
vii) Entwässerung mittels einer Schneckenhammermühle (j);
wobei die Entwässerungsphase (vii) die Faser zwischen dem ersten Extrudermühlenelement zusammenpresst und sie mit dem Hammermühlenelement dispergiert, unter Erzeugung von Prozenten niedriger als 30 % Feuchtigkeit bezogen aus das Trockengewicht der Faser.

2. Kontinuierliches Verfahren zum Erhalten eines festen Kraftstoffs umfassend Lignocellulose basierend auf biologischem Material, mit einem niedrigen Energieverbrauch, aus Kuhdung, nach Anspruch 1, **dadurch gekennzeichnet, dass** der anfängliche granulometrische Filterungsschritt (ii) und der endliche granulometrische Filterungsschritt (vi) einen Feststoff mit einer Filtermaschenweite von 0,841 mm bis 2 mm für die erste Filterung, und einen Feststoff mit einer Filtermaschenweite von 0,25 mm bis 2 mm für die zweite Filterung filtrieren, wobei wahlweise in beiden Schritten (ii) und (vi) die Filterung mit Schwingung einhergeht.

3. Kontinuierliches Verfahren zum Erhalten eines festen Kraftstoffs umfassend Lignocellulose basierend auf biologischem Material, mit einem niedrigen Energieverbrauch, aus Kuhdung, nach Anspruch 1, **dadurch gekennzeichnet, dass** der Kavitations- und Aufprallschritt (v) ein passiver Schritt oder Schritt mit sehr niedrigem Energieverbrauch ist, basierend nur auf dem Verbrauch einer Kavitationspumpe (g1), unter Erreichung in Millisekunden eines Druckgefälles von über 50 % in Bezug auf den Eingangsdruck in diesem Schritt, wobei die Kavitation aerob und/oder mit Ozon hergestellt wird, unter Erzeugung von gasförmigen Produkten, welche für deren spätere Verwendung entnommen und kanalisiert werden, wobei die Kavitation auch die Prozesse der inneren und äußeren Reinigung und Sanitisierung der Faser optimiert, wobei zusätzlich die Flüssigkeit, welche durch die Kavitation durchgehen wird, einen verdünnten Fasergehalt im Bereich von 0,5 % bis 5 % aufweist, wobei zusätzlich der Strömungsaufprall zwischen Strömungen in entgegengesetzte Richtungen oder gegen eine Platte bevorzugt wird, mit einem Abstand zwischen Strömungen oder zwischen der Strömung und der Platte von zwischen 1 cm und 200 cm, die Beziehung folgend dass je kleiner der Abstand ist, desto größer die Zerkleinerung der Faser ist.

4. Kontinuierliches Verfahren zum Erhalten eines festen Kraftstoffs umfassend Lignocellulose basierend auf biologischem Material, mit einem niedrigen Energieverbrauch, aus Kuhdung, nach Anspruch 1, **dadurch gekennzeichnet, dass** die Jauchepumpe (a) des Waschsystems (I) das Material von einer Jauchegrube (A) aus durch einen Fest-Flüssig-Abscheider (C) treibt, um dann den feuchten Feststoff auf einer anfänglichen Vorrichtung der Sichter-, Sieb- oder Drehfilter-Art (b) abzulagern, wobei der Feststoff die Flüssigkeiten hauptsächlich filtert und dann der Feststoff auf einem Schneckendosiertrichter (c) fällt, welcher den Inhalt in einem Spender (d) ablagert, wobei die Mengen von zu entwässernder Faser im Wasch- und Befeuchtungstank (e) unterteilt werden, wobei dieser Feststoff mit Wasser gerührt wird und wahlweise Ozon aus einem beiliegenden Ozonvorbereitungstank (o) angewendet wird, um es später zu einem Stoß-Kavitationstank (g) entnommen zu werden, wobei Strahlen dazu gebracht werden, zu kavitieren und gegeneinander oder gegen eine Platte zu stoßen, um die Faser innerlich und äußerlich zu zerkleinern, wobei dann der feuchte Feststoff auf einer endlichen Vorrichtung der Sichter-, Sieb- oder Drehfilter-Art (h) gesiebt wird, um denselben Feststoff mit dem Hammermühle-Bohrelement (j) schließlich zu extrudieren und dispergieren, um es schließlich den letzten Trocknungsschritten zu liefern, wobei der Wasch- und Befeuchtungstank (e) einen Tank mit einem Fassungsvermögen zwischen 5 und 100 m³ umfasst, mit einem Eingang für das Waschwasser (e1), das unter oder über dem Tank gehen kann, und durch diesen Eingang die wahlweise Einspritzung von Ozon (O₃), mit einem zweiten Eingangspunkt für den zu behandelnden Feststoff (e2), wobei in der Mitte des Tanks ein rohrförmiges Blattrührgerät (e3) bereitgestellt wird, wobei gleichzeitig das Waschwasser aus der ersten Einspritzung (e1) einen Fluss erzeugt, welcher den Feststoff mitschleppt, sodass es in Kombination mit dem Effekt der zuvor erwähnten zentripetalen Bewegung trennt, wobei, wahlweise, der Inhalt des genannten Wasch- und Befeuchtungstanks (e) von der Mitte aus mittels Blätter mit dem entsprechenden Waschwasser vom ersten Eingang (e1) einfach zentrifugal gerührt werden kann, unter Erzeugung eines Flusses, welcher den Feststoff mitschleppt und trennt, wobei die überflüssige Flüssigkeit im genannten Wasch- und Befeuchtungstank (e) auch durch den Niveauübertragungsausgang (e4), im oberen Teil des Wasch- und Befeuchtungstanks (e), abgeführt wird, unter Übertragung des Inhaltes zurück zur Jauchegrube oder zum Tanker (A), wobei der Wasch- und Befeuchtungstank (e) auch die Funktion des Homogenisierens und des Entgasens des überschüssigen Ozons (O₃) durchführt.

5. Kontinuierliches Verfahren zum Erhalten eines festen Kraftstoffs umfassend Lignocellulose basierend auf biologischem Material, mit einem niedrigen Energieverbrauch, aus Kuhdung, nach Anspruch 4, **dadurch gekennzeichnet, dass** die anfänglichen (b) und die endlichen Vorrichtungen (h) der Sichter-, Sieb- oder Drehfilter-Art einen anfänglichen gefilterten Lichtbündel zwischen 2 mm und 0,841 mm und einen endlichen gefilterten Lichtbündel zwischen 2 mm und 0,841 mm umfassen, mit der Möglichkeit einen oder mehrere nachfolgenden oder parallelen Filter aufzuweisen, und mit der Möglichkeit Schwingung aufzuweisen.

6. Kontinuierliches Verfahren zum Erhalten eines festen Kraftstoffs umfassend Lignocellulose basierend auf biologischem Material, mit einem niedrigen Energieverbrauch, aus Kuhdung, nach Anspruch 4, **dadurch gekennzeichnet, dass** die Übertragung von Feststoffen vom Wasch- und Befeuchtungstank (e) mittels Kavitationspumpen (g1) zum Kavitations- und Aufprallbehälter (g) ist, welcher Kavitations- und Aufprallleitung(en) (g2) umfasst, welche wiederum zwei miteinander verbundene Hauptstrukturen, die Kavitations- und Laminarströmungsleitung (g2a) und die Aufprallleitung (g2b), umfasst/umfassen, wobei die Kavitations- und Laminarströmungsleitung (g2a) eine rohrförmige Struktur mit verjüngten Innen- und Außendurchmessern umfasst, wobei innerlich die Kavitationsleitungen (g2) drei Abschnitte umfassen, welche von wo die Abfallströmung eintritt bis wo sie austritt angeordnet sind, beginnend mit dem Durchmesser der Eingangsleitung (g2ad) im ersten Düsenabschnitt (g2aa) wo der Innendurchmesser der Kavitationsleitung (g2) mit einem Düsenwinkel zwischen 15° und 35° verjüngt ist, wobei diese Verjüngung des Innendurchmessers (g2ae) der Kavitationsleitung (g2) von einer leichten Verringerung des Eingangsinnendurchmessers der Kavitationsleitung (g2) bis zu 1/5 des Innendurchmessers geht, wonach der zweite Strömungslastabschnitt (g2ab) kommt, welcher einen konstanten Innendurchmesser bezüglich der Verjüngung des Innendurchmessers des vorherigen Abschnittes hält, dann der dritte und letzte Abschnitt des Diffusors (g2ac) kommt, wo sich der Innendurchmesser der Kavitationsleitung (g2) erneut mit einem Winkel zwischen 5° und 10° erweitert, bis es den gleichen Eingangsdurchmesser (g2ad) der Kavitationsleitung (g2) erreicht, dies ist wo der Kavitationseffekt erzeugt wird, als die Strömung am Rand des Winkels vorbeigeht, welcher gebildet wird, wenn sich der Durchmesser der Leitung ausdehnt, unter Erzeugung eines plötzlichen Druckgefälles mit der Herstellung von Mikrobläschen im Fluid und dessen Koaleszenz, wobei, weitergehend in die Richtung der Strömung, ein zweites Element bezeichnet als Aufprallleitung (g2b) angeschlossen ist, umfassend drei Abschnitte, wobei der erste Abschnitt den gleichen Innendurchmesser des Eingangs (g2ae) zur Kavitationsleitung (g2) hält und als Trennabschnitt (g2ba) bezeichnet wird, wo einen physikalischen Raum gegeben wird, um die Abfallkomponentenelemente zu trennen, und dann der Ausgangsverringerungsabschnitt (g2bb) angeschlossen ist, wo der Eingangsdurchmesser (g2ad) auf einen größeren Durchmesser (g2bd) in Bezug auf den Verringerungsdurchmesser (g2ae) des Strömungslastabschnitts (g2ab) verringert wird, im Bereich von 45 % bis leicht weniger als der Innendurchmesser der Kavitationsleitung (g2), wobei der Verringerungswinkel in diesem Abschnitt im Bereich von 25° bis 35° liegt, dann der Ausgangsabschnitt (g2bc) kommt, welcher den Ausgangsstrahl in den Kavitations- und Aufprallbehälter (g) führt, wo zwei Ausgangsstrahlen dann gegeneinander prallen, oder ein Ausgangsstrahl gegen eine der Behälterwände, oder gegen eine Folie oder ein Lenkblech, wo die Aufprallrichtung zwischen Strahlen vorzugsweise frontal ist, obwohl gewinkelt sein kann, wenn es mehr als zwei Strahlen gibt, mit einem Abstand zwischen 1 cm und 200 cm, wobei die Fähigkeit der Strahlen die Fasern zu zerkleinern indirekt mit den Abständen zwischen den Aufprallleitungen (g2b) in Zusammenhang steht, wo zur Verbesserung des frontalen Aufpralls von zwei Strahlen das Lenk- und Aufprallrohr (g2h) angeordnet ist, welches aus einem Rohr mit dem gleichen Durchmesser wie der Aufprallleitungsausgang (g2b) besteht, aber mit zwei seitlichen Bohrungen (g2f) und einer unteren zentralen Bohrung (g2g), welche die Aufgabe des Kanalisierens der Aufprallexplosion und des Sturzes des Feststoffes durch den Produktausgang (g3a) erfüllen, wo auch für die Beseitigung dieser flüchtigen Verunreinigungen der Kavitations- und Aufpralltank (g) in dessen oberen Teil eine Gasausgangsleitung (g3d) beinhaltet, welche die Gase kanalisiert und in das biologische Materialkonzentrat und den inerten Verunreinigungstank (G) brodelt, wobei schließlich der Kavitations- und Aufpralltank (g) einen Griff (g3b) für die Wartung der Kavitationsleitungen und ein Betrachtungsgerät (g3c), um den Betrieb der Vorrichtung zu überprüfen, aufweist.

7. Kontinuierliches Verfahren zum Erhalten eines festen Kraftstoffs umfassend Lignocellulose basierend auf biologischem Material, mit einem niedrigen Energieverbrauch, aus Kuhdung, nach Anspruch 4, **dadurch gekennzeichnet, dass** die Hammermühle-Schneckenvorrichtung (j) des Waschsystems (I) eine kompakte Vorrichtung ist, welche mit zwei Elementen funktioniert, erstens ein Extrudermühlenelement und zweitens ein Hammermühlenelement, wobei das erste Extrudermühlenelement die folgenden zusammenhängenden Elemente umfasst, einen Eingangstrichter (j6), welcher die Feststoffe durch die Schneckenwelle (j1) kanalisiert, welche die Feststoffe gegen das Festspannsystem (j8) bewegt, wobei die Schneckenwelle (j1) wiederum eine kontinuierliche Spiralröhre (j1a) mit einem Drehwinkel, welcher zwischen 15° und 50° schwankt, umfasst, zusätzlich umfassend zwei Röhrenendbuchsen (j1b), mit einer inneren Röhrenverstärkung (j1c), alles auf einer Welle (j1d) montiert, mit einer Wellenendbuchse (j1e), wobei die Schneckenwelle (j1) auch im Extruderschneckenelement der Hammermühle-Schneckenvorrichtung (j) durch eine hintere Stütze (j2) gestützt ist und auf zwei verjüngten kreisförmigen Lagern (j3) montiert ist, um die Bewegung der Schneckenwelle (j1) zu halten, wobei diese Lager gehalten werden, um deren Auslauf die Linie der Welle folgend zu verhindern, mittels Spannhülsen (j5), in Parallel ein O-Ring (j4) diese Lager (j3) vom Material, welches in den Eingangstrichter (j6) eintritt, die Schneckenwelle (j1) folgend, trennt, bevor es das Spannsystem (j8) erreicht, es durch eine Sichtervorrichtung (j7) durchgeht, umfassend einen kreisförmigen Sichter (j7a) mit zwischen 80 und 1000 Aufspannplatten, mit einer Maschenweite zwischen 0,05 und 3 mm, gestützt auf einer Sichterstütze (j7c) und im Sichtergehäuse (j7b) eingeschlossen, welches das beim Quetschen entnommene Wasser durch den zu rezirkulierenden Abfluss (j7f) kanalisiert, unter Zurückhaltung der Feststoffe auf der Oberfläche, wobei die Sichtervorrichtung (j7) mittels des Sichtergriffs (j7e) und der Beseitigung der Vorrichtungsabdeckung (j7d) zur Reinigung leicht entfernbar ist, wobei das Festspannsystem (j8) durch die obere Abdeckung (j22), die obere Seitenabdeckung (j23) und die untere Seitenabdeckung (j20) gebunden ist, welche die Ansammlung von festem Material unterstützen, welches mittels der Blätter (j8e) zerkleinert wird, welche am Blatthalter (j8a) befestigt sind, welcher wiederum auf der Horizontalachse mittels der Feder (j8c) stabilisiert ist, welche wiederum Druck gegen die Richtung des Materials durch die Schneckenwelle (j1) ausübt, wo, um mit dem Extrudermühlenelement der Hammermühle-Schneckenvorrichtung (j) gekoppelt zu werden, sie durch einen Hebelhalter (j8b) montiert ist, welcher den Hebel (j8d) hält, welcher das Festspannsystem (j8) zur gesamten Vorrichtung hält, im Falle dass die Blätter (j8e) ersetzt werden müssen, wobei das Festspannsystem (j8) die Feststoffe zusammenpresst und zerkleinert, und sich diese teilweise auf der Schneckenwelle (j1) ansammeln, unter Freigabe von Flüssigkeit in die Siebvorrichtung (j7), jedoch die meisten Feststoffe mittels Druck und Schwerkraft in die Mahlbaugruppe (j14) oder eine traditionelle Hammermühle entsprechend dem zweiten Element der Hammermühle-Schneckenvorrichtung (j) fallen, wobei diese Mahlbaugruppe (j14) ein Stützgehäuse (j14c) und einen kreisförmigen Ausgang von festem Material (j14b) umfasst, wobei sie innerlich einen Satz von symmetrischen kreuzförmigen Mahl- oder Zerkleinerungsblättern (j14a), welche auf einem Rohr (j14i) montiert sind, welches sich um eine quadratische Mahlwelle (j14h) dreht, wobei für diese Drehung, die Mahlwelle (j14h) zwischen zwei Lagern (j14d) mit quadratischer Grundfläche an jedem Ende des Rohrs außerhalb des Gehäuses platziert ist, wo die Blätter durch die von der Drehung des Ritzels (j14f) zugeführten Energie und durch den vom Feststoff ausgeübten Druck, als er durch die von einem Gitter (j14g) mit einer Maschenweite leicht größer als die Dicke des Blatts erzeugten Einschnürung rausgezwungen wird, gedreht werden, wobei, damit die Mahlbaugruppe in Position ist und sich deren Welle frei dreht, sie auch einen Mahlbaugruppe-Stützlager (j14e) enthält, welcher auf der Mahlbaugruppestütze (j17) montiert ist, auf der Schneckenwelle (j1), nach dem Festspannsystem (j8), der Lager (j9) und die Hauptstütze (j16), welche das meiste der Hammermühle-Schneckenvorrichtung (j) hält, kommt, dann der Ritzelbereich kommt, begrenzt von der oberen Abdeckung (j19) und den Seitenabdeckungen (j21), dieser Bereich den Satz aus großem Ritzel (j10) und kleinem Ritzel (j11), welcher auf der Welle (j1d) montiert ist, schützt, wobei das große Ritzel (j10) die mechanische Leistung für die Mahlbaugruppe (j14) bereitstellt, danach der Getriebemotor (j12) kommt, welcher Leistung zur gesamten Hammermühle-Schneckenvorrichtung (j) zuführt, wobei dieser Motor direkt mittels einer Standardmotorwelle (j13) mit der Welle (j1d) assoziiert ist, um die Drehung zur gesamten Vorrichtung zuzuführen, wobei schließlich der Motor auf der Motorbasis (j18) gestützt ist und mittels der Motorstütze (j15) platziert ist.

## Revendications

1. Procédé continu pour obtenir un combustible solide comprenant de la lignocellulose à base de matière biologique, présentant une faible consommation d'énergie à partir de fumier de bétail, dans lequel cette matière biologique est alimentée à un système de lavage (I), dans lequel, après que cette matière biologique passes à travers le système de lavage (I), la matière biologique est transportée à travers un passage (16) dans lequel elle est pressée ou centrifugée (O), éliminant l'excès d'eau à partir de la matière, qui est ensuite amenée à travers un passage (18) vers un séchoir (P), qui est alimentée avec un courant d'air chaud généré par une chaudière (Q) à travers un passage (21), dans lequel, ensuite, la matière est tamisée et/ou amenée à travers un passage (19) par le biais de magnétisme par vibration à sec (S), dans lequel cette matière biologique de type poudre peut ensuite être agglomérée (T) à travers un passage (20) et/ou conformée pour donner des briquettes (T) et/ou être maintenue comme une poudre sans agglomération, **caractérisé en ce que** les étapes consécutives suivantes sont réalisées dans le système de lavage (I):
i) impulsion à travers une pompe à purin (a);
ii) filtrage granulométrique initial;
iii) dosage;
iv) mouvement centripète ou centrifuge avec turbulence d'eau et injection optionnelle d'ozone; à l'intérieur d'un réservoir de lavage et d'humidification (e);
v) cavitation et impact;
vi) filtrage granulométrique final ;
vii) déshydratation par broyeur à marteaux et à vis (j);
dans lequel, l'étape de déshydratation (vii) comprime la fibre entre le premier élément de broyeur extrudeur et la disperse avec l'élément de broyeur à marteaux, générant des pourcentages inférieurs à 30 % d'humidité par poids sec de la fibre.

2. Procédé continu pour obtenir un combustible solide comprenant de la lignocellulose à base de matière biologique, présentant une faible consommation d'énergie à partir de fumier de bétail, selon la revendication 1, **caractérisé en ce que** les étapes de filtration granulométrique initiale (ii) et de filtration granulométrique finale (vi) filtrent un solide présentant une dimension de maille de filtre de 0,841 mm à 2 mm pour la première filtration, et un solide présentant une dimension de maille de filtre de 0,25 mm à 2 mm pour la deuxième filtration, dans lequel, optionnellement, dans les deux étapes (ii) et (vi) le filtrage s'accompagne de vibration.

3. Procédé continu pour obtenir un combustible solide comprenant de la lignocellulose à base de matière biologique, présentant une faible consommation d'énergie à partir de fumier de bétail, selon la revendication 1, **caractérisé en ce que** l'étape de cavitation et impact (v) est une étape passive ou à consommation d'énergie très faible basée uniquement sur la consommation d'une pompe de cavitation (g1), qui atteint en millisecondes une chute de pression supérieure à 50 % par rapport à la pression d'entrée dans cette étape, dans lequel la cavitation est produite de manière aérobique et/ou par l'ozone, générant des produits gazeux qui sont extraits et canalisés pour une utilisation ultérieure, dans lequel la cavitation optimise également les processus de nettoyage et de désinfection internes et externes de la fibre, dans lequel en outre le liquide qui va passer à travers la cavitation présente une teneur en fibres diluée dans l'intervalle de 0,5 % à 5 %, dans lequel en outre l'impact d'écoulement est de préférence entre des écoulements en sens opposés ou contre une plaque, avec une distance entre les écoulements ou entre l'écoulement et la plaque comprise entre 1 cm et 200 cm, suivant la relation selon laquelle plus la distance est petite, plus le déchirement de la fibre est grand.

4. Procédé continu pour obtenir un combustible solide comprenant de la lignocellulose à base de matière biologique, présentant une faible consommation d'énergie à partir de fumier de bétail, selon la revendication 1, **caractérisé en ce que** la pompe à purin (a) du système de lavage (I) déplace la matière d'une fosse à purin (A) à travers un séparateur solide/liquide (C), pour ensuite déposer le solide humide sur un dispositif initial du type crible, tamis ou filtre rotatif (b), dans lequel le solide filtre principalement les liquides et ensuite le solide tombe sur un trémie d'alimentation à vis (c) qui dépose le contenu dans un distributeur (d), dans lequel les quantités de fibre à hydrater dans le réservoir de lavage et d'humidification (e) sont sectionnées, dans lequel ce solide est agité avec de l'eau et optionnellement de l'ozone est appliqué à partir d'un réservoir de préparation d'ozone (o) annexe pour être extrait ultérieurement vers un réservoir de cavitation et d'impact (g), dans lequel on fait en sorte que des jets cavitent et impactent les uns avec les autres ou contre une plaque pour déchirer la fibre de manière interne et externe, dans lequel le solide humide est ensuite tamisé sur un dispositif final du type crible, tamis ou filtre rotatif (h) pour extruder et disperser finalement ledit solide avec l'élément de fraise de broyeur à marteaux (j), pour le fournir finalement vers les dernières étapes de séchage, dans lequel le réservoir de lavage et d'humidification (e) comprend un réservoir avec une capacité de 5 à 100 m³, avec une entrée pour l'eau de lavage (e1) qui peut aller au-dessous ou en dessous du réservoir, et à travers cette entrée, l'injection optionnelle d'ozone (O₃), avec un deuxième point d'entrée pour le solide (e2) à traiter, dans lequel, au centre du réservoir, un appareil d'agitation à palettes tubulaire (e3) est prévu, dans lequel, en même temps, l'eau de lavage à partir de la première injection (e1) génère un courant qui entraîne le solide le séparant en combinaison avec l'effet du mouvement centripète mentionné précédemment, dans lequel, optionnellement, le contenu dudit lavage et humidification (e) peut simplement être agité par centrifugation à partir du centre par le biais de palettes, l'eau de lavage correspondant à partir de la première entrée (e1) générant un courant qui entraîne et sépare le solide, dans lequel l'excès de liquide dans ledit réservoir de lavage et d'humidification (e) est également déversé à travers la sortie de transfert de niveau (e4), dans la partie supérieure du réservoir de lavage et d'humidification (e), transférant le contenu en retour vers le réservoir ou fosse à purin (A), dans lequel le réservoir de lavage et d'humectation (e) remplit également la fonction d'homogénéisation et de dégazage de l'excès d'ozone (O₃).

5. Procédé continu pour obtenir un combustible solide comprenant de la lignocellulose à base de matière biologique, présentant une faible consommation d'énergie à partir de fumier de bétail, selon la revendication 4, **caractérisé en ce que** les dispositifs initial (b) et final (h) du type crible, tamis ou filtre rotatif comprennent un faisceau de lumière de filtre initial compris entre 2 mm et 0,841 mm et un faisceau de lumière de filtre final compris entre 2 mm et 0,841 mm, avec la possibilité de présenter un ou plusieurs filtres en série ou parallèles, et avec la possibilité d'avoir des vibrations.

6. Procédé continu pour obtenir un combustible solide comprenant de la lignocellulose à base de matière biologique, présentant une faible consommation d'énergie à partir de fumier de bétail, selon la revendication 4, **caractérisé en ce que** le transfert de solides à partir du réservoir de lavage et d'humidification (e) est réalisé par le biais de pompes de cavitation (g1) vers le bassin de cavitation et d'impact (g) comprenant un/plusieurs conduit(s) de cavitation et d'impact (g2), qui à leur tour comprennent deux structures interconnectées principales, le conduit de cavitation et d'écoulement laminaire (g2a) et le conduit d'impact (g2b), dans lequel le conduit de cavitation et d'écoulement laminaire (g2a) comprend une structure sous forme tubulaire avec des diamètres interne et externe à section décroissante, dans lequel à l'intérieur les conduits de cavitation (g2) comprennent trois sections, disposées de l'endroit où l'écoulement de résidus entre vers l'endroit où ils sortent, en commençant par le diamètre du conduit d'entrée (g2ad) dans la première section de buse (g2aa) dans laquelle le diamètre interne du conduit de cavitation (g2) présente une section décroissante avec un angle de buse compris entre 15° et 35°, dans lequel cette section décroissante du diamètre interne (g2ae) du conduit de cavitation (g2) passe d'une légère réduction du diamètre interne d'entrée du conduit de cavitation (g2) jusqu'à 1/5 du diamètre interne, après quoi se présente la deuxième section de charge d'écoulement (g2ab), qui maintient un diamètre interne constant par rapport à la section décroissante du diamètre interne de la section précédente, puis se présente la troisième et dernière section du diffuseur (g2ac) dans laquelle le diamètre interne du conduit de cavitation (g2) s'élargit à nouveau selon un angle compris entre 5° et 10° jusqu'à atteindre le même diamètre d'entrée (g2ad) du conduit de cavitation (g2), c'est là l'endroit où l'effet de cavitation est généré lorsque l'écoulement passe par le bord de l'angle formé lorsque le diamètre du conduit s'élargit, générant une chute de pression soudaine avec la production de microbulles dans le fluide et sa coalescence, dans lequel, se poursuivant dans le sens de l'écoulement, est relié un deuxième élément appelé conduit d'impact (g2b) qui comprend trois sections, dans lequel la première section conserve le même diamètre interne de l'entrée (g2ae) vers le conduit de cavitation (g2) et est appelée section de séparation (g2ba), dans laquelle un espace physique est prévu pour la séparation des éléments composants des résidus, et ensuite la section de réduction de sortie (g2bb) est reliée, dans laquelle le diamètre d'entrée (g2ad) est réduit jusqu'à un diamètre plus grand (g2bd) par rapport au diamètre de réduction (g2ae) de la section de charge d'écoulement (g2ab), dans l'intervalle de 45 % à légèrement inférieur au diamètre interne du conduit de cavitation (g2), dans lequel l'angle de la réduction dans cette section se trouve dans l'intervalle de 25° à 35°, ensuite se présente la section de sortie (g2bc), qui guide le jet de sorti vers le bassin de cavitation et d'impact (g) dans lequel deux jets de sortie impactent alors l'un contre l'autre, ou un jet de sortie contre l'une des parois du bassin, ou contre une tôle ou chicane, dans lequel la direction d'impact entre les jets est de préférence de front, bien qu'elle puisse être inclinée s'il y a plus de deux jets, à une distance comprise entre 1 cm et 200 cm, dans lequel la capacité à déchirer les fibres des jets est indirectement liée aux distances entre les conduits d'impact (g2b), dans lequel, pour améliorer l'impact frontal de deux jets, le tube de direction et d'impact (g2h) est pourvu, qui consiste en un tube de même diamètre que la sortie de conduit d'impact (g2b) mais avec deux perforations latérales (g2f) et une perforation centrale inférieure (g2g) qui remplissent l'objectif de canaliser l'explosion d'impact et la chute du solide par une sortie de produit (g3a), dans lequel, également pour l'élimination de ces contaminants volatils, le réservoir de cavitation et d'impact (g) comporte, dans sa partie supérieure, un conduit de sortie de gaz (g3d) qui canalise et fait buller les gaz dans le réservoir de concentré de matière biologique et d'impuretés inertes (G), enfin, le réservoir de cavitation et d'impact (g) présente une poignée (g3b) pour l'entretien des conduits de cavitation et un viseur (g3c) pour vérifier le fonctionnement du dispositif.

7. Procédé continu pour obtenir un combustible solide comprenant de la lignocellulose à base de matière biologique, présentant une faible consommation d'énergie à partir de fumier de bétail, selon la revendication 4, **caractérisé en ce que** le dispositif à vis de broyeur à marteaux (j) du système de lavage (I) est un dispositif compact fonctionnant avec deux éléments, premièrement un élément de broyeur extrudeur et deuxièmement un élément de broyeur à marteaux, dans lequel le premier élément de broyeur extrudeur comprend les éléments interdépendants suivants, une trémie d'entrée (j6) qui canalise les solides à travers un arbre de vis (j1) qui déplace les solides contre le système de serrage (j8), dans lequel l'arbre de vis (j1) comprend à son tour un tuyau hélicoïdal continu (j1a) avec un angle de rotation compris entre 15° et 50°, comprenant en outre deux douilles d'extrémité de tuyau (j1b), avec un renforcement de tuyau interne (j1c), tous montés sur un arbre (j1d), avec une douille d'extrémité d'arbre (j1e), dans lequel l'arbre de vis (j1) est également supporté sur l'élément de vis d'extrudeur du dispositif à vis de broyeur à marteaux (j) par un support arrière (j2) et monté sur deux paliers circulaires à section décroissante (j3) pour supporter le mouvement de l'arbre de vis (j1), ces paliers étant supportés pour empêcher leur dépassement suivant la ligne de l'arbre, par des manchons de serrage (j5), parallèlement un joint torique (j4) sépare ces paliers (j3) de la matière qui entre dans la trémie d'entrée (j6), suivant l'arbre de vis (j1), avant d'atteindre le système de serrage (j8), elle passe à travers un dispositif de criblage (j7), comprenant un crible circulaire (j7a) ayant entre 80 et 1000 plateaux, avec une dimension de maille comprise entre 0,05 et 3 mm, supporté sur un support de crible (j7c) et enfermé dans le boîtier de crible (j7b), qui canalise l'eau extraite lors de la compression à travers le drain (j7f) pour être recirculée, retenant les solides sur la surface dans lequel le dispositif de criblage (j7) est facile à retirer par le biais de la poigné de crible (j7e) et du retrait du couvercle de dispositif (j7d) pour le nettoyage, dans lequel le système de serrage (j8) est délimité par les couvercles supérieur (j22), latéral supérieur (j23) et latéral inférieur (j20) qui supportent l'accumulation de matière solide déchirée par le biais des palettes (j8e) qui sont fixées au porte-palettes (j8a), qui à son tour est stabilisé sur l'axe horizontal par le ressort (j8c), qui à son tour exerce une pression contre le sens de la matière par l'arbre de vis (j1), dans lequel, pour être fixé à l'élément de broyeur extrudeur du dispositif à vis de broyeur à marteaux (j), il est monté à travers un porte-levier (j8b) qui supporte le levier (j8d), qui supporte le système de serrage (j8) sur tout le dispositif en cas où il est nécessaire de remplacer les palettes (j8e), dans lequel le système de serrage (j8) comprime et déchire les solides et ceux-ci s'accumulent partiellement sur l'arbre de vis (j1), libérant du liquide dans le dispositif de tamisage (j7), néanmoins la plupart des solides tombent par pression et gravité dans l'ensemble de broyage (j14) ou sur un broyeur à marteaux traditionnel correspondant au deuxième élément du dispositif à vis de broyeur à marteaux (j), dans lequel cet ensemble de broyage (j14) comprend un logement de support (j14c) et une sortie circulaire de matière solide (j14b), dans lequel il comprend, à l'intérieur, un ensemble de palettes de broyage ou de déchirement symétriques sous forme de croix (j14a) montées sur un tube (j14i), qui tourne autour d'un arbre de broyage carré (j14h), dans lequel, pour cette rotation, l'arbre de broyage (j14h) est positionné entre deux paliers à base carrée (j14d) de chaque extrémité du tube à l'extérieur du logement, dans lequel les palettes tournent par l'énergie fournie par la rotation du pignon (j14f) et par la pression exercée par le solide au four et à mesure qu'il est forcé vers l'extérieur par la restriction générée par une grille (j14g) avec une dimension de maille légèrement supérieure à l'épaisseur de la palette, dans lequel, afin que l'ensemble de broyage soit en position et que l'arbre tourne librement, il contient également un palier de support d'ensemble de broyage (j14e), qui est monté sur le support d'ensemble de broyage (j17), sur l'arbre de vis (j1), après le système de serrage (j8), se présente le palier (j9) et le support principal (j16) qui supporte la plupart du dispositif à vis de broyeur à marteaux (j), ensuite se présente la zone de pignon, délimité par le couvercle supérieur (j19) et les couvercles latéraux (j21), cette zone protège l'ensemble de pignon grand (j10) et petit (j11) monté sur l'arbre (j1d), dans lequel le pignon grand (j10) fourni la puissance mécanique à l'ensemble de broyage (j14), après ceci se présente le moteur à engrenages (j12) qui fournit de la puissance à tout le dispositif à vis de broyeur à marteaux (j), dans lequel ce moteur est directement associé par le biais d'un arbre de moteur (j13) conventionnel à l'arbre (j1d) pour fournir la rotation à tout le dispositif, dans lequel, enfin, le moteur est supporté sur la base de moteur (j18) et il est positionné par le support de moteur (j15).
